(19) Europäisches Patentamt
European Patent Office
Office européen des brevets

(11) EP 3 023 447 A1

(12) EUROPÄISCHE PATENTANMELDUNG

(43) Veröffentlichungstag:
**25.05.2016 Patentblatt 2016/21**

(51) Int Cl.:
***C08G 65/26*** *(2006.01)* ***C08G 64/34*** *(2006.01)*

(21) Anmeldenummer: **14193601.3**

(22) Anmeldetag: **18.11.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Covestro Deutschland AG**
**51373 Leverkusen (DE)**

(72) Erfinder:
- **Die Erfinder haben auf ihre Nennung verzichtet.**

(74) Vertreter: **Levpat**
**c/o Covestro AG**
**Alfred-Nobel-Straße 10**
**40789 Monheim am Rhein (DE)**

# (54) Verfahren zur Herstellung von Polyethercarbonatpolyolen

(57) Die vorliegende Erfindung betrifft ein Verfahren zur Herstellung von Polyethercarbonatpolyolen, umfassend den Schritt der Reaktion von Alkylenoxid mit Kohlendioxid in Gegenwart einer H-funktionellen Starterverbindung und Doppelmetallcyanid-Katalysator, dadurch gekennzeichnet, dass das Verfahren die folgenden Schritte umfasst:
(α) gegebenenfalls Vorbehandeln des Doppelmetallcyanid-Katalysators (DMC-Katalysators) bei einer Temperatur von 50 bis 200 °C und/oder reduziertem Druck (absolut) von 10 mbar bis 800 mbar,
(β) Inkontaktbringen des Doppelmetallcyanid-Katalysators mit Suspensionsmittel und weiterhin mit Alkylenoxid in einem ersten Reaktor unter Erhalt einer ersten Reaktionsmischung; und
(γ) kontinuierliches Hinzudosieren der ersten Reaktionsmischung, Alkylenoxid und Kohlendioxid und gegebenenfalls H-funlctioneller Starterverbindung in einen zweiten Reaktor,

wobei wenigstens in einem der Schritte (β) oder (γ) mindestens eine H-funktionelle Starterverbindung eingesetzt wird.

EP 3 023 447 A1

## Beschreibung

Die vorliegende Erfindung betrifft ein Verfahren zur Herstellung von Polyethercarbonatpolyolen aus einer oder mehreren H-funktionellen Starterverbindungen, einem oder mehreren Alkylenoxiden und Kohlendioxid in Gegenwart eines in einem vorgelagerten Schritt aktivierten Doppelmetallcyanid- (DMC-) Katalysators. Sie betrifft weiterhin nach dem erfindungsgemäßen Verfahren erhaltene Polyethercarbonatpolyole.

Moderne Kunststoffe sollen neben einer maßgeschneiderten Funktionalität auch verstärkt ökologischen Gesichtspunkten Rechnung tragen. Dies kann, neben einer allgemeinen Optimierung von Herstellprozessen, auch durch den Einsatz von Treibhausgasen, wie Kohlendioxid, als Synthesebaustein zum Aufbau von Polymeren erreicht werden. So lässt sich zum Beispiel über die Fixierung von Kohlendioxid insgesamt eine bessere Prozess-Umweltbilanz erhalten. Dieser Weg wird im Bereich der Herstellung von Polyethercarbonaten beschritten und ist seit mehr als 40 Jahren Stand intensiver Forschung (z. B. Inoue et al., Copolymerization of Carbon Dioxide and Alkylenoxide with Organometallic Compounds; Die Makromolekulare Chemie 130, 210-220, 1969). In einer möglichen Herstellungsvariante werden dabei Polyethercarbonatpolyole durch eine katalytische Umsetzung von Alkylenoxiden und Kohlendioxid in Anwesenheit H-funktioneller Starterverbindungen ("Starter") erhalten. Eine allgemeine Reaktionsgleichung hierfür ist:

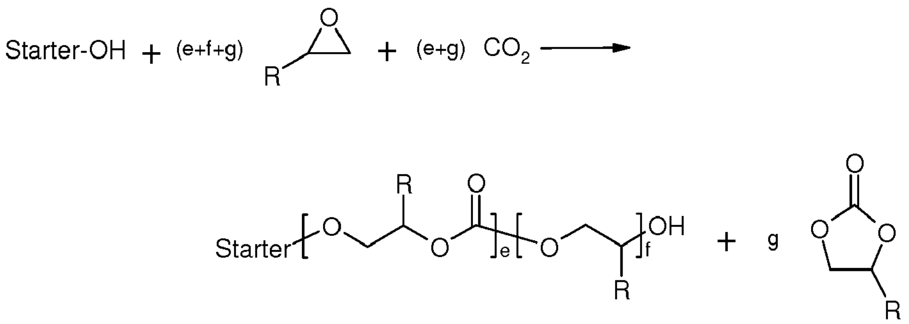

Als weiteres Produkt, hier ein unerwünschtes Nebenprodukt, entsteht neben dem Polyethercarbonatpolyol ein cyclisches Carbonat (beispielsweise für R = $CH_3$ Propylencarbonat).

In der Literatur werden einige unterschiedliche Herstellvarianten beschrieben. So beschreibt zum Beispiel US 2010/0048935 A1 ein Verfahren zur Herstellung von Polyethercarbonatpolyolen durch Umsetzung von Alkylenoxiden und Kohlendioxid mit H-funktionellen Starterverbindungen mittels eines DMC-Katalysators, in welchem eine oder mehrere Starterverbindungen in einem Reaktor vorgelegt und des Weiteren eine oder mehrere Starterverbindungen kontinuierlich im Laufe der Reaktion zudosiert werden. Als ein mögliches Alkylenoxid wird epoxidiertes Sojaöl erwähnt. Die Reaktivität dieser Oxiranringe ist jedoch gering, da sie im Inneren einer Kette liegen und sterisch stark abgeschirmt sind. Daher wird das epoxidierte Sojaöl langsamer umgesetzt als übliche Monomere, wie Propylenoxid, und reichert sich in der Reaktionsmischung an. Da epoxidiertes Sojaöl zudem eine Mischung mehrfach epoxidierter Verbindungen darstellt, ist ein gezielter Aufbau definierter Polymerarchitekturen nicht möglich.

WO 2006/103213 A1 hingegen beschreibt ein Verfahren zur Herstellung von Polyethercarbonatpolyolen mit verbessertem Einbau von $CO_2$ in das Polyethercarbonatpolyol unter Verwendung eines Multimetall-Cyanid-Katalysators. Die Schrift offenbart die Anwesenheit eines H-funktionellen Starters, eines Alkylenoxids und Kohlendioxid in Gegenwart des Multimetall-Cyanid-Katalysators in einem Reaktor. Des Weiteren offenbart das Dokument die Anwesenheit einer $CO_2$-philen Substanz oder $CO_2$-philer Substituenten. Die $CO_2$-phile Substanz oder der $CO_2$-phile Substituent soll den Einbau des $CO_2$ in das Polyethercarbonatpolyol erleichtern und derart die Bildung cyclischer Alkylencarbonate, wie zum Beispiel Propylencarbonat, welche unerwünschte Nebenprodukte darstellen, reduzieren. Die $CO_2$-phile Substanz muss nach der Reaktion aus dem erhaltenen Reaktionsgemisch abgetrennt werden, was zu erhöhtem Zeit- und Kostenaufwand führt.

In WO 2012/130760 A1 wird der Einsatz von höherfunktionellen Alkoholen als Starter in der Umsetzung von Epoxiden mit $CO_2$ zu Polyethercarbonaten unter Katalyse mit Doppelmetallcyaniden (DMC) genannt.

EP 0 222 453 A2 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP 0 222 453 A2 für den Aktivierungsschritt in den Beispielen 1 bis 7 angegebene Menge von 60 Gew.-% Alkylenoxid relativ zur H-funktionellen Starterverbindung ist hoch und hat den Nachteil, dass dies für großtechnische Anwendungen aufgrund der hohen Exothermie der Homo-Polymerisation von Alkylenoxiden ein Sicherheitsrisiko darstellt.

WO 2003/029325 A1 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den überaus hohen Druck von 150 bar werden nur ca. 33 Gew.-% $CO_2$ bis maximal 42 Gew.-% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Polydispersität von 2,7 oder mehr eine sehr breite Molmassenverteilung auf.

Für die Umsetzung der Epoxid/$CO_2$-Copolymerisation in den technischen Maßstab besteht Bedarf an einer Methode zur Durchführung der Reaktion in einer kontinuierlich betriebenen Anlage, die die Nachteile des Standes der Technik, wie z.B. eine lange Aktivierungsdauer und eine stark herabgesetzte Katalysatoraktivität in Gegenwart von $CO_2$ und kurzkettigen Starterverbindungen und daraus folgend eine geringe mittlere Reaktionsgeschwindigkeit und eine lange Verweilzeit des Reaktionsgemisches im Reaktor (entsprechend einer geringen spezifischen Produktleistung), nicht aufweist.

Unter einer hohen spezifischen Produktleistung wird im Sinne der Erfindung eine hohe mittlere Reaktionsgeschwindigkeit der Anlagerung von Epoxiden und $CO_2$ an H-funktionelle Starterverbindungen ("Copolymerisation") verstanden. Die spezifische Produktleistung eines Reaktors oder, allgemeiner, eines Verfahrens, kann als der Quotient aus dem Massenstrom an eingesetztem Alkylenoxid und Starterverbindung multipliziert mit dem erhaltenen Umsatz an Alkylenoxid und dem Volumen der flüssigen Phase in dem betreffenden Reaktor bestimmt werden. Die spezifische Produktleistung ist in $kg/(m^3 \cdot h)$ angegeben.

Die Aufgabe bestand daher darin, ein Verfahren zur Herstellung von Polyethercarbonatpolyolen bereit zu stellen, welches sich durch eine hohe spezifische Produktleistung auszeichnet, und wobei das resultierende Polyethercarbonatpolyol eine enge Molmassenverteilung (niedrige Polydispersität) und eine möglichst niedrige Viskosität aufweist.

Überraschend wurde gefunden, dass die erfindungsgemäße Aufgabe gelöst wird durch den Einsatz von DMC-Katalysatoren, die in einem vorgelagerten Schritt in Gegenwart von Suspensionsmittel und/oder einer oder mehrerer H-funktioneller Starterverbindungen aktiviert werden. Diese aktivierten DMC-Katalysatoren werden gemeinsam mit Suspensionsmittel und/oder einer oder mehreren H-funktionellen Starterverbindungen kontinuierlich dem Polymerisationsreaktor zugeführt. Mit den so aktivierten Katalysatoren kann in der Copolymerisation von Epoxiden und $CO_2$ eine besonders hohe spezifische Produktleistung erzielt werden. Die nach dem erfindungsgemäßen Verfahren erhaltenen Polyethercarbonatpolyole zeichnen sich durch eine enge Molmassenverteilung, einen geringen Anteil an längeren Polymerketten im Produktgemisch sowie eine überraschend niedrige Viskosität aus.

Weiterhin wurde gefunden, dass in einem kontinuierlichen Verfahren, bei dem DMC-Katalysatoren eingesetzt werden, die in Abwesenheit von Kohlendioxid mit Propylenoxid aktiviert werden, wobei kurzkettige Starterverbindungen vorgelegt werden oder semi-kontinuierlich zu dosiert werden ("CAOS Fahrweise"), mit besonders hoher spezifischer Produktleistung Polyethercarbonatpolyole erhalten werden.

Gegenstand der vorliegenden Erfindung ist daher ein Verfahren zur Herstellung von Polyethercarbonatpolyolen, umfassend den Schritt der Reaktion von Alkylenoxid mit Kohlendioxid in Gegenwart einer H-funktionellen Starterverbindung und Doppelmetallcyanid-Katalysator, wobei das Verfahren die folgenden Schritte umfasst:

($\alpha$) gegebenenfalls Vorbehandeln des Doppelmetallcyanid-Katalysators (DMC-Katalysators) bei einer Temperatur von 50 bis 200 °C und/oder reduziertem Druck (absolut) von 10 mbar bis 800 mbar, vorzugsweise Vorbehandeln des DMC-Katalysators in einer Mischung mit Suspensionsmittel bei einer Temperatur einer Temperatur von 50 bis 200 °C und/oder reduziertem Druck (absolut) von 10 mbar bis 800 mbar und gegebenenfalls unter Durchleiten eines Inertgases durch die Mischung aus DMC-Katalysator und Suspensionsmittel (Schritt der "Trocknung"),

($\beta$) Inkontaktbringen des Doppelmetallcyanid-Katalysators und Suspensionsmittel, mit Alkylenoxid in einem ersten Reaktor unter Erhalt einer ersten Reaktionsmischung (Schritt der "Aktivierung"); und

($\gamma$) Kontinuierliche Zugabe der ersten Reaktionsmischung, Alkylenoxid und Kohlendioxid und gegebenenfalls H-funktioneller Starterverbindung in einen zweiten Reaktor (Schritt der "Polymerisation"),

wobei wenigstens in einem der Schritte ($\beta$) oder ($\gamma$) mindestens eine H-funktionelle Starterverbindung eingesetzt wird.

Die Verwendung eines aktivierten Katalysators gemäß dem erfindungsgemäßen Verfahren führt zu einer verringerten Alkylenoxid-Konzentration im Reaktionsgemisch im Vergleich zu einer Verfahrensführung unter Verwendung eines nicht aktivierten Katalysators. Die verringerte Alkylenoxid-Konzentration ergibt eine erhöhte intrinsische Prozesssicherheit und ermöglicht kürzere Nachreaktionszeiten in nachgelagerten Verarbeitungsschritten.

Als Aktivierung im Sinne dieser Erfindung (Schritt ($\beta$)) wird insbesondere ein Schritt bezeichnet, bei dem eine Teilmenge Alkylenoxid, Suspensionsmittel und gegebenenfalls $CO_2$ zum DMC-Katalysator gegeben werden. Gegebenenfalls kann die Zugabe der Teilmenge des Alkylenoxids in mehreren Einzelschritten erfolgen.

Im Allgemeinen kann dem Aktivierungsschritt ein Schritt zum Trocknen des DMC-Katalysators und gegebenenfalls des Suspensionsmittels bei erhöhter Temperatur und/oder reduziertem Druck, gegebenenfalls unter Durchleiten eines Inertgases durch die Reaktionsmischung, vorgelagert sein (Schritt (α)).

Sofern im Zusammenhang der vorliegenden Erfindung von "einem Alkylenoxid", "einer H-funktionellen Starterverbindung", etc. die Rede ist, wird hierdurch keine Festlegung auf den Singular angestrebt, sondern ein unbestimmter Artikel verwendet. Erfindungsgemäß mit eingeschlossen sind daher auch Gemische von Alkylenoxiden, und Gemische von H-funktionellen Starterverbindungen.

Charakteristisch für die erfindungsgemäß hergestellten Polyethercarbonatpolyole ist, dass diese zwischen den Carbonatgruppen auch Ethergruppen enthalten. In Bezug auf Formel (Ia) bedeutet dies, dass das Verhältnis von e/f bevorzugt von 2 : 1 bis 1 : 20, besonders bevorzugt von 1,5 : 1 bis 1 : 10 beträgt. Carbonatgruppen und Ethergruppen sind statistisch entlang der Polymerkette verteilt.

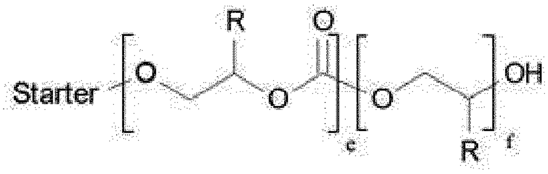
(Ia)

Geeignete Alkylenoxide (Epoxide) sind beispielsweise eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, einfach epoxidierte Fette als Mono-, Di- und Triglyceride, einfach epoxidierte Fettsäuren, C1-C24-Ester von einfach epoxidierten Fettsäuren, einfach epoxidierte Derivate des Glycidols wie beispielsweise Methylglycidylether, Ethylglycidylether, 2-Ethylhexylglycidylether, Allylglycidylether, Glycidylmethacrylat sowie epoxyfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropylmethyl-dimethoxysilan, 3-Glycidyloxypropylethyldiethoxysilan oder 3-Glycidyloxypropyltriisopropoxysilan.

Suspensionsmittel im Sinne der Erfindung sind H-funktionelle Starterverbindungen oder Verbindungen, die keine H-funktionellen Gruppen enthalten.

Es ist erfindungsgemäß vorgesehen, dass wenigstens in einem der Schritte (β) oder (γ) mindestens eine H-funktionelle Starterverbindung eingesetzt wird. Wenn in Schritt (β) als Suspensionsmittel eine H-funktionelle Starterverbindung eingesetzt wird, kann (muss aber nicht) in Schritt (γ) H-funktionelle Starterverbindung in den zweiten Reaktor zugegeben werden. Wenn wiederum in Schritt (β) als Suspensionsmittel keine H-funktionelle Starterverbindung eingesetzt wird, wird in Schritt (γ) eine H-funktionelle Starterverbindung in den zweiten Reaktor hinzugegeben.

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Starterverbindung wird beispielsweise eine oder mehrere Verbindung(en) ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol® -Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, *tert*-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-*tert*-Butoxy-2-propanol., 1-Pentanol, 2-Pentanol, 3-Pentanol, 1-Hexanol, 2-Hexanol, 3-Hexanol,

1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an $\varepsilon$-Caprolacton.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z.B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des Weiteren können als H-funktionelle Starterverbindungen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Bayer MaterialScience AG verwendet werden, wie z.B. Desmophen® C 1100 oder Desmophen® C 2200.

In einer weiteren Ausführungsform der Erfindung können Polyethercarbonatpolyole als H-funktionelle Starterverbindungen eingesetzt werden. Insbesondere werden Polyethercarbonatpolyole, die nach dem hier beschriebenen erfindungsgemäßen Verfahren erhältlich sind, eingesetzt. Diese als H-funktionelle Starterverbindungen eingesetzten Polyethercarbonatpolyole werden hierzu in einem separaten Reaktionsschritt zuvor hergestellt.

Die H-funktionellen Starterverbindungen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Starterverbindungen werden entweder einzeln oder als Gemisch aus mindestens zwei H-funktionellen Starterverbindungen eingesetzt.

Bevorzugte H-funktionelle Starterverbindungen sind Alkohole der allgemeinen Formel:

HO-($CH_2$)x-OH

wobei x eine Zahl von 1 bis 20, bevorzugt eine ganze Zahl von 2 bis 20 ist. Beispiele für Alkohole gemäß obiger Formel sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß obiger Formel mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, und Polyethercarbonatpolyole eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid sowie di- und trifunktionelle Polyethercarbonatpolyole, wobei das Polyethercarbonatpolyol aus einer di- oder tri-H-funktionellen Starterverbindung, Kohlendioxid und Propylenoxid und/oder Ethylenoxid aufgebaut ist. Die Polyetherpolyole und Polyethercarbonatpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

Suspensionsmittel, die keine H-funktionellen Gruppen enthalten, sind beispielsweise alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie ß-Propiolacton, ß-Butyrolacton, ß-Isovalerolacton, ß-Caprolacton, ß-Isocaprolacton, ß-Methyl-ß-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, Thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten

Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Epoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring eingesetzt. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Die in dem erfindungsgemäßen Verfahren eingesetzten DMC-Katalysatoren enthalten Doppelmetallcyanid-Verbindungen, die die Reaktionsprodukte wasserlöslicher Metallsalze und wasserlöslicher Metallcyanidsalze sind.

Doppelmetallcyanid (DMC)-Katalysatoren sind aus dem Stand der Technik zur Homopolymerisation von Alkylenoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP A 761 708, WO 97/40086 A1, WO 98/16310 A1 und WO 00/47649 A1 beschrieben sind, besitzen eine sehr hohe Aktivität und ermöglichen die Herstellung von Polyethercarbonatpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man:

(a) im ersten Schritt eine wässrige Lösung eines Metallsalzes mit der wässrigen Lösung eines Metallcyanidsalzes in Gegenwart eines oder mehrerer organischer Komplexliganden, z.B. eines Ethers oder Alkohols, umsetzt,

(b) wobei im zweiten Schritt der Feststoff aus der aus (a) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der folgenden allgemeinen Formel auf:

$$M(X)_n$$

wobei M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und $Cu^{2+}$.

Bevorzugt ist M $Zn^{2+}$, $Fe^{2+}$, $Co^{2+}$ oder $Ni^{2+}$, X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat; n ist 1, wenn X = Sulfat, Carbonat oder Oxalat ist und n ist 2, wenn X = Halogenid, Hydroxid, Carboxylat, Cyanat, Thiocyanat, Isocyanat, Isothiocyanat oder Nitrat ist.

Ebenfalls geeignete Metallsalze weisen eine Zusammensetzung nach der folgenden allgemeinen Formel auf:

$$M_r(X)_3$$

wobei M ausgewählt ist aus den Metallkationen $Fe^{3+}$, $Al^{3+}$, $Co^{3+}$ und $Cr^{3+}$, X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat; r ist 2, wenn X = Sulfat, Carbonat oder Oxalat ist und r ist 1, wenn X = Halogenid, Hydroxid, Carboxylat, Cyanat, Thiocyanat, Isocyanat, Isothiocyanat oder Nitrat ist.

Ebenfalls geeignete Metallsalze weisen eine Zusammensetzung nach der folgenden allgemeinen Formel auf:

$$M(X)_s$$

wobei M ausgewählt ist aus den Metallkationen $Mo^{4+}$, $V^{4+}$ und $W^{4+}$, X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat; s ist 2, wenn X = Sulfat, Carbonat oder Oxalat ist und s ist 4, wenn X = Halogenid, Hydroxid, Carboxylat, Cyanat, Thiocyanat, Isocyanat, Isothiocyanat oder Nitrat ist.

Ebenfalls geeignete Metallsalze weisen eine Zusammensetzung nach der folgenden allgemeinen Formel auf:

$$M(X)t$$

wobei M ausgewählt ist aus den Metallkationen $Mo^{6+}$ und $W^{6+}$, X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat; t ist 3, wenn X = Sulfat, Carbonat oder Oxalat ist und t ist 6, wenn X = Halogenid, Hydroxid, Carboxylat, Cyanat, Thiocyanat, Isocyanat, Isothiocyanat oder Nitrat ist.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der folgenden allgemeinen Formel auf:

$$(Y)_aM'(CN)_b(A)_c$$

wobei M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c ganzzahlige Zahlen sind, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren

enthalten sind, sind Verbindungen mit einer Zusammensetzung nach der folgenden allgemeinen Formel:

$$M_x[M'_{x'}(CN)_y]_z$$

worin M und M' wie vorstehend definiert sind und x, x', y und z ganzzahlig und so gewählt sind, dass die Elektronenneutralität der Doppelmetallcyanidverbindung gegeben ist.

Vorzugsweise ist x = 3, x' = 1, y = 6 und z = 2, M = Zn(II), Fe(II), Co(II) oder Ni(II) und M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, *tert*-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-*tert*-butylether, Diethylenglykol-mono-*tert*-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, *tert*-Butanol 2-Methyl-3-buten-2-ol, 2-Methyl-3-butin-2-ol, Ethylenglykol-mono-*tert*-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly (acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische Oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. *tert*-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt

die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (c-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des organischen Komplexliganden in der wässrigen Waschlösung zwischen 40 und 80 Gew.%, bezogen auf die Gesamtlösung des ersten Waschschritts. In den weiteren Waschschritten (c-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischem Komplexliganden und weiterer komplexbildender Komponente (bevorzugt im Bereich zwischen 0,5 und 5 Gew.%, bezogen auf die Gesamtmenge der Waschlösung des Schrittes (c-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von 20 - 100°C und bei Drücken von 0,1 mbar bis Normaldruck (1013 mbar) getrocknet.

Ein besonders bevorzugtes Verfahren zur Isolierung der erfindungsgemäß einsetzbaren DMC-Katalysatoren aus der Suspension durch Filtration, Filterkuchenwäsche und Trocknung wird zum Beispiel in der WO-A 01/80994 beschrieben.

Die vorliegende Erfindung wird nachfolgend im Zusammenhang mit weiteren Ausführungsformen und Aspekten näher beschrieben. Sie können beliebig miteinander kombiniert werden, sofern sich aus dem Kontext nicht einwandfrei das Gegenteil ergibt.

In einer Ausführungsform des erfindungsgemäßen Verfahrens wird in Schritt (β) der Doppelmetallcyanid-Katalysator weiterhin mit Kohlendioxid in Kontakt gebracht.

In einer weiteren Ausführungsform des erfindungsgemäßen Verfahrens werden in Schritt (β) Doppelmetallcyanid-Katalysator, Alkylenoxid, Suspensionsmittel und/oder H-funktionelle Starterverbindung zumindest zeitweise kontinuierlich in den ersten Reaktor hinzudosiert.

In einer weiteren Ausführungsform des erfindungsgemäßen Verfahrens werden in Schritt (γ) gebildete Reaktionsprodukte aus dem zweiten Reaktor kontinuierlich entnommen. Insofern kann zumindest der zweite Reaktor als kontinuierlich betrieben angesehen werden. Als ein kontinuierlich betriebener Reaktor im Sinne dieser Erfindung wird ein Reaktor bezeichnet, in den zumindest Alkylenoxid, Kohlendioxid, DMC-Katalysator und H-funktionelle Starterverbindung kontinuierlich dosiert werden und das Produktgemisch kontinuierlich dem Reaktor entnommen wird.

In einer weiteren Ausführungsform des erfindungsgemäßen Verfahrens ist die Summe der in den zweiten Reaktor eingetragenen Massenströme zumindest über einen bestimmten Zeitraum gleich der Summe der aus dem zweiten Reaktor ausgetragenen Massenströme. Bevorzugt entspricht dieser Zeitraum mindestens der mittleren Verweilzeit der flüssigen Phase im Reaktor, besonders bevorzugt ist dieser Zeitraum länger als das Dreifache und ganz besonders bevorzugt das Zehnfache der mittleren Verweilzeit der flüssigen Phase im Reaktor.

In einer weiteren Ausführungsform des erfindungsgemäßen Verfahrens beträgt das Verhältnis des Massenstroms, mit der die erste Reaktionsmischung in den zweiten Reaktor dosiert wird, zu dem Massenstrom, mit der Alkylenoxid in den zweiten Reaktor dosiert wird, ≥ 0,001 bis ≤ 10, bevorzugt ≥ 0,1 bis ≤ 5 und ganz besonders bevorzugt ≥ 0,25 bis ≤ 2,5.

In einer weiteren Ausführungsform des erfindungsgemäßen Verfahrens sind der erste Reaktor und/oder der zweite Reaktor ein rückvermischter Reaktor. Unter rückvermischt im Sinne der Erfindung wird ein Reaktor verstanden, in dem in der flüssigen Reaktionsmischung die Konzentrationen aller Stoffe innerhalb gewisser Grenzen räumlich und zeitlich konstant sind. Eine solche isotrope Konzentrationsverteilung in der flüssigen Reaktionsmischung kann durch Rühren der Reaktionsmischung oder durch einen Umpumpkreislauf bewirkt werden.

In einer weiteren Ausführungsform des erfindungsgemäßen Verfahrens wird ein Teil des nach Schritt (γ) erhaltenen Produktes in den ersten und/oder zweiten Reaktor zurückgeführt.

In einer weiteren Ausführungsform des erfindungsgemäßen Verfahrens wird als Alkylenoxid Ethylenoxid und/oder Propylenoxid eingesetzt.

In einer weiteren Ausführungsform des erfindungsgemäßen Verfahrens wird in Schritt β) und/oder in Schritt (γ) eine Mehrzahl von Alkylenoxiden eingesetzt.

In einer weiteren Ausführungsform des erfindungsgemäßen Verfahrens wird in Schritt (β) und/oder in Schritt (γ) eine Mehrzahl von H-funktionellen Starterverbindungen eingesetzt.

In einer weiteren Ausführungsform des erfindungsgemäßen Verfahrens wird als H-funktionelle Starterverbindung mindestens eine Verbindung ausgewählt aus der Gruppe enthaltend Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine, Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und $C_1$-$C_{24}$ Alkyl-Fettsäureester, die im Mittel mindestens 2 OH-Gruppen pro Molekül enthalten, eingesetzt.

In einer weiteren Ausführungsform des erfindungsgemäßen Verfahrens enthält der eingesetzte Doppelmetallcyanid-Katalysator mindestens eine Verbindung ausgewählt aus der Gruppe Zinkhexacyanocobaltat(III), Zinkhexacyanoiridat(III), Zinkhexacyanoferrat(III) und/oder Cobalt(II)hexacyanocobaltat(III).

In einer weiteren Ausführungsform des erfindungsgemäßen Verfahrens werden die Schritte β) und/oder γ) bei einem Druck von ≥ 10 mbar bis ≤ 100 bar, vorzugsweise ≥ 100 mbar bis ≤ 90 bar und bevorzugt ≥ 500 mbar bis ≤ 75 bar durchgeführt.

Gegenstand einer weiteren erfindungsgemäßen Ausführungsform ist ein Verfahren, wobei

(α) das Vorbehandeln des Doppelmetallcyanid-Katalysators (DMC-Katalysators) bei einer Temperatur von 50 bis 200 °C und/oder reduziertem Druck (absolut) von 10 mbar bis 800 mbar erfolgt, wobei

(α1) im ersten Reaktor der DMC-Katalysator und H-funktionelle Starterverbindung vorgelegt werden,

(α2) durch den ersten Reaktor bei einer Temperatur von 50 bis 200°C ein Inertgas ein Inertgas-Kohlendioxid-Gemisch oder Kohlendioxid geleitet wird und gleichzeitig durch Entfernen des Inertgases oder Kohlendioxid ein reduzierter Druck (absolut) von 10 mbar bis 800 mbar im ersten Reaktor eingestellt wird.

Es ist möglich, dass die Aktivierung des DMC-Katalysators (Schritt (β)) in Anwesenheit oder Abwesenheit von Kohlendioxid erfolgt.

Gegenstand einer weiteren erfindungsgemäßen Ausführungsform ist ein Verfahren, wobei in Schritt (α) der DMC-Katalysator und H-funktionelle Starterverbindung kontinuierlich in den ersten Reaktor dosiert werden.

In einer bevorzugten Variante der beiden zuvor geschilderten Ausführungsformen beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (β) eingesetzte Menge an Suspensionsmittel). Das Alkylenoxid kann in einem Schritt oder schrittweise in mehreren Teilmengen zugegeben werden.

Der DMC-Katalysator wird vorzugsweise in einer Menge eingesetzt, so dass der Gehalt an DMC-Katalysator im resultierenden Polyethercarbonatpolyol 10 bis 10000 ppm, besonders bevorzugt 20 bis 5000 ppm und höchst bevorzugt 50 bis 500 ppm beträgt.

<u>Zu Schritt (α):</u>

Die Zugabe der einzelnen Komponenten in Schritt (α1) kann gleichzeitig oder nacheinander in beliebiger Reihenfolge erfolgen; bevorzugt wird in Schritt (α1) zunächst DMC-Katalysator vorgelegt und gleichzeitig oder anschließend H-funktionelle Starterverbindung zugesetzt.

Gegenstand einer weiteren bevorzugten Ausführungsform ist ein Verfahren, wobei in Schritt (α)

(α1) im ersten Reaktor der DMC-Katalysator und die H-funktionelle Starterverbindung oder ein Gemisch aus mindestens zwei H-funktionellen Starterverbindungen, gegebenenfalls unter Inertgasatmosphäre (beispielsweise Stickstoff oder Argon), unter einer Atmosphäre aus Inertgas-Kohlendioxid-Gemisch oder unter einer reinen Kohlendioxid-Atmosphäre, besonders bevorzugt unter Inertgasatmosphäre (beispielsweise Stickstoff oder Argon) vorgelegt werden und

(α2) im ersten Reaktor in das resultierende Gemisch aus DMC-Katalysator und einer oder mehrerer H-funktioneller Starterverbindungen bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid, besonders bevorzugt Inertgas (beispielsweise Stickstoff oder Argon) eingeleitet wird und gleichzeitig durch Entfernen des Inertgases oder Kohlendioxid (beispielsweise mit einer Pumpe) ein reduzierter Druck (absolut) von 10 mbar bis 800 mbar, bevorzugt von 40 mbar bis 200 mbar im Reaktor eingestellt wird, wobei der Doppelmetallcyanid-Katalysator zu der H-funktionellen Starterverbindung oder dem Gemisch von mindestens zwei H-funktionellen Starterverbindungen in Schritt (α1) oder unmittelbar anschließend in Schritt (α2) zugesetzt wird.

In Schritt (α1) kann der DMC-Katalysator und H-funktionelle Starterverbindung kontinuierlich in den ersten Reaktor dosiert werden.

Zu Schritt (β)

Das Einstellen einer Atmosphäre aus Inertgas-Kohlendioxid-Gemisch (beispielsweise Stickstoff-Kohlendioxid-Gemisch oder Argon-Kohlendioxid-Gemisch) oder einer reinen Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 90 bar und bevorzugt 500 mbar bis 75 bar beträgt. Der Start der Dosierung des Alkylenoxids kann aus dem Vakuum heraus oder bei einem zuvor gewählten Vordruck erfolgen. Als Gesamtdruck (absolut) der Atmosphäre aus Inertgas-Kohlendioxid-Gemisch (beispielsweise Stickstoff-Kohlendioxid-Gemisch oder Argon-Kohlendioxid-Gemisch) oder einer reinen Kohlendioxid-Atmosphäre und ggf. Alkylenoxid wird in Schritt (β) vorzugsweise ein Bereich von 10 mbar bis 100 bar, vorzugsweise 100 mbar bis 75 bar und bevorzugt 500 mbar bis 75 bar eingestellt. Gegebenenfalls wird während oder nach der Dosierung des Alkylenoxids der Druck durch Einleiten von weiterem Kohlendioxid nachgeregelt, wobei der Druck (absolut) 10 mbar bis 100 bar, vorzugsweise 100 mbar bis 75 bar und bevorzugt 500 mbar bis 75 bar beträgt.

Der DMC-Katalysator kann in fester Form oder als Suspension in einer H-funktionellen Starterverbindung zugegeben werden. Wird der DMC-Katalysator als Suspension zugegeben, wird diese bevorzugt in Schritt (α1) der H-funktionellen Starterverbindung zugefügt.

In einer bevorzugten Ausführungsform der Erfindung wird in Schritt (β) als Suspensionsmittel mindestens eine H-funktionelle Starterverbindung ausgewählt aus der Gruppe bestehend aus Polyetherpolyolen, Polycarbonatpolyolen, Polyestercarbonatpolyolen, Polyetherestercarbonatpolyolen oder Polyethercarbonatpolyolen eingesetzt, wobei diese H-funktionelle Starterverbindungen jeweils eine Hydroxylzahl im Bereich von 3,0 mg KOH/g bis 1000 mg KOH/g, vorzugsweise von 3,0 mg KOH/g bis 300 mg KOH/g aufweisen.

Zu Schritt (γ): (Co-)Polymerisation

Die kontinuierliche Zugabe der ersten Reaktionsmischung (aus Schritt (β) resultierend), Alkylenoxid und Kohlendioxid und gegebenenfalls H-funktioneller Starterverbindung in einen zweiten Reaktor kann simultan oder wechselweise erfolgen. Es ist möglich, während der Zugabe den $CO_2$-Druck allmählich oder schrittweise zu steigern oder zu senken oder gleich zu lassen. Vorzugsweise wird der Gesamtdruck während der Reaktion konstant gehalten. Die Dosierung der ersten Reaktionsmischung, Alkylenoxid und gegebenenfalls H-funktioneller Starterverbindung erfolgt simultan oder wechselweise zur Kohlendioxid-Dosierung. Es ist möglich, die erste Reaktionsmischung, Alkylenoxid und gegebenenfalls H-funktionelle Starterverbindung jeweils mit konstanter Dosierrate zu dosieren oder jeweils die Dosierrate allmählich oder schrittweise zu steigern oder zu senken oder diese einzelnen Komponenten portionsweise zuzugeben. Bevorzugt wird die erste Reaktionsmischung, Alkylenoxid und gegebenenfalls H-funktionelle Starterverbindung mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden können. Die Dosierung der Alkylenoxide kann simultan oder wechselweise über jeweils separate Dosierungen (Zugaben) erfolgen oder über eine oder mehrere Dosierungen, wobei die Alkylenoxide einzeln oder als Gemisch dosiert werden können.

Der hier verwendete Begriff "kontinuierlich" kann als Modus der Zugabe einer Komponente so definiert werden, dass eine im Wesentlichen kontinuierlich wirksame Konzentration des DMC-Katalysators oder des Reaktanden aufrechterhalten wird. Die Zugabe einer Komponente kann echt kontinuierlich oder in relativ eng beabstandeten Inkrementen erfolgen. Es würde nicht vom vorliegenden Verfahren abweichen, eine Komponente (enthaltend DMC-Katalysator oder Reaktanden) inkrementell so zuzugeben, dass die Konzentration der zugegebenen Komponenten für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass H-funktionelle Startersubstanz während des Hauptteils des (Co-)Polymerisations-Verfahrens vorhanden ist. Eine inkrementelle Zugabe einer Komponente, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Je nach den gewählten Reaktionsbedingungen ist es möglich, das $CO_2$ im gasförmigen, flüssigen oder überkritischen Zustand in den Reaktor einzuleiten.

In den Schritten (β) und/oder (γ) wird das Kohlendioxid bevorzugt in die Mischung eingeleitet durch

(i) Begasung des Reaktionsgemisches im Reaktor von unten (beispielsweise über ein Einleitrohr oder einen Begasungsring (Verteilring) mit Führung des Gases unterhalb des Rührflügels) und je nach Gasbeladung gegebenenfalls in Kombination mit einem Gas-Zerteilungsrührer (beispielsweise ein Scheibenrührer, Schaufelrührer, Rushton-Turbine (zum Beispiel Lightnin R-100®, Ekato PHASE-JET®, Smith-Turbine® von Philadelphia Mixing Solutions, Chemineer BT-6® oder CD-6® Rührflügel), wobei gegebenenfalls auf der Rührwelle weitere Rührorgane (beliebigen Typs, z.B. je nach Schlankheitsgrad des Reaktors axial-fördernde Turbinen, den Wärmeübergang zu innen-liegenden Kühlflächen unterstützende und/oder den Stoffübergang über die Flüssigkeitsoberfläche fördernde Rührorgane) angeordnet sind; eine Kombination von zwei oder mehreren Rührorganen hat den technischen Vorteil, dass der Stoffübergang des Gases in die flüssige Phase an der Oberfläche der Reaktionsmischung verbessert werden kann;

(ii) Verwendung eines Hohlwellenrührers (d.h. mittels des Prinzips des Strahlsaugers), beispielsweise als Rohrrührer, Schrägblatt-Turbine mit Hohlflügeln, Ekato GASJET®, PREMEX Laborbegasungsrüher der "br"-Serie, Laborbegasungsrüher von Parr Instruments; Die Verwendung eines Hohlwellenrührers bewirkt, dass die sich im Gasraum ansammelnde Gasphase über eine Hohlwelle angesaugt und erneut von unten in die Reaktionsmischung eingebracht wird;

(iii) Kombination aus den Dosierungen gemäß (i) und (ii), was vorteilhaft für den Betrieb bei konstantem Füllstand im Reaktor ist; Beispielsweise kann die Kombination aus den Dosierungen gemäß (i) und (ii) derart erfolgen, dass eine Begasung des Reaktionsgemisches im Reaktor von unten gemäß einer der unter (i) genannten Möglichkeiten mit einem Hohlwellenrührer gemäß (ii) (wie beispielsweise einem Gaszerteilungsrührer mit darüber angeordnetem Strahlsauger als zweite Dispergierstufe) kombiniert wird, vorzugsweise derart, dass die Einleitung des Gases von unten unterhalb des Hohlwellenrührers erfolgt; und/oder

(iv) Begasung über die Flüssigkeitsoberfläche durch Einsatz entsprechender, typischerweise mehrstufiger ausgeführter Rührorgane (wie z.B. MIG oder Ekato MIG / INTERMIG®) bzw. mittels an der Flüssigkeitsoberfläche wirkender Rührorgane (z.B. Gitterrührer).

Die Auslegung der Rührbedingungen ist fallbezogen vom Fachmann in Abhängigkeit der Reaktionsbedingungen (z.B. Flüssigphasenviskosität, Gasbeladung, Oberflächenspannung) nach Stand der Rührtechnik vorzunehmen, um z.B. ein Überfluten eines von unten begasten Rührorgans sicher zu vermeiden bzw. den gewünschten Leistungseintrag und/oder Stoffübergang im Begasungszustand sicherzustellen. Gegebenenfalls enthält der Reaktor Einbauten wie beispielsweise Stromstörer und/oder Kühlflächen (ausgeführt als Rohr, Wendel, Platten oder in ähnlicher Form), Begasungsring und/oder Einleitrohr. Weitere Wärmetauscherflächen können in einem Umpumpkreislauf angeordnet werden, wobei die Reaktionsmischung dann über geeignete Pumpen (z.B. Schraubenspindelpumpe, Zentrifugal- oder Zahnradpumpe) gefördert wird. Der Kreislaufstrom kann hierbei z.B. auch über eine Injektordüse in den Reaktor zurückgeführt werden, wodurch ein Teil des Gasraums angesogen und zwecks Verbesserung des Stoffübergangs intensiv mit der Flüssigphase vermischt wird.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchtem Alkylenoxid) aus dem über der Reaktionsmischung befindlichen Gasraum abgesaugt wird und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder kombiniert werden mit einer Absaugung des Gases aus dem Gasraum über der Reaktionsmischung und anschließender Re-Kompression des Gases. Beispielsweise wird das aus dem Gasraum über der Reaktionsmischung abgesaugte und komprimierte Gas, gegebenenfalls gemischt mit frischem Kohlendioxid und/oder Alkylenoxid, in das Reaktionsgemisches gemäß (i), (ii), (iii) und/oder (iv) eingeleitet. Bevorzugt wird ein Überschuss an Kohlendioxid eingesetzt, so dass über frisch zudosiertes Kohlendioxid mindestens der Druckabfall ausgeglichen wird, der über Einbau des Kohlendioxids und des Alkylenoxids bei der Copolymerisation in das Reaktionsprodukt entsteht.

Die Einleitung des Alkylenoxids kann separat oder zusammen mit dem $CO_2$ sowohl über die Flüssigkeitsoberfläche oder direkt in die flüssige Phase erfolgen. Bevorzugt erfolgt die Einleitung des Alkylenoxids direkt in die flüssige Phase, da dies den Vorteil hat, dass eine rasche Durchmischung des eingebrachten Alkylenoxids mit der flüssigen Phase erfolgt und so lokale Konzentrationsspitzen von Alkylenoxid vermieden werden. Die Einleitung in die flüssige Phase kann über ein oder mehrere Einleitungsrohre, eine oder mehrere Düsen oder eine oder mehrere ringförmige

Anordnungen von Mehrfach-Dosierstellen erfolgen, die bevorzugt am Boden des Reaktors und/oder an der Seitenwand des Reaktors angeordnet sind.

Für das erfindungsgemäße Verfahren hat sich weiterhin gezeigt, dass die (Co-)Polymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Unterhalb von 50°C läuft die Reaktion nur sehr langsam ab. Bei Temperaturen oberhalb von 150°C steigt die Menge an unerwünschten Nebenprodukten stark an.

Die Schritte (α), (β) sowie (γ) werden erfindungsgemäß mindestens in zwei aufeinanderfolgenden Reaktoren durchgeführt, nämlich Schritte (α), (β) in einem ersten Reaktor und Schritt (γ) in einem zweiten Reaktor. Die drei Schritte (α), (β) und (γ) können auch jeweils separat in drei aufeinanderfolgenden Reaktoren durchgeführt werden. Besonders bevorzugte Reaktortypen sind jeweils Rührkessel, Rohrreaktor, Rohrreaktor mit Rückführung, und Schlaufenreaktor. Für jeden Schritt kann ein unterschiedlicher Reaktortyp verwenden werden.

Eine bevorzugte Ausführungsform für die (Co-)Polymerisation in einem kontinuierlich betriebenen Rührkessel, in einem Rohrreaktor mit Rückführung oder in einem Schlaufenreaktor ist dadurch gekennzeichnet, dass die erste Reaktionsmischung, Alkylenoxid, Kohlendioxid und H-funktionellen Starterverbindung kontinuierlich in den zweiten Reaktor zugegeben werden. Wird in Schritt (β) als Suspensionsmittel mindestens eine H-funktionelle Starterverbindung eingesetzt, dann beträgt die Menge der in Schritt (γ) zugegebenen H-funktionellen Starterverbindungbevorzugt mindestens 20 mol% Äquivalente, besonders bevorzugt 70 bis 95 mol% Äquivalente (jeweils bezogen auf die gesamte Menge an H-funktionellen Starterverbindungen). Vorzugsweise wird dem Rührkessel, Rohrreaktor mit Rückführung oder Schlaufenreaktor kontinuierlich ein Teil des Produktgemisches entnommen; dies hat den Vorteil, dass die in dem zweiten Reaktor enthaltene Menge Produktgemisch innerhalb gewisser Grenzen konstant bleibt.

Der Rührkessel oder Rohrreaktor mit Rückführung wird je nach Ausführungsform und Betriebsweise über den Reaktormantel, innen liegende und/oder in dem Umpumpkreislauf befindliche Kühlflächen gekühlt. Es ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während dem Aktivierungsschritt (Schritt (β)) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der (Co-)Polymerisation (Schritt (γ)) beträgt vorzugsweise > 0 bis 40 Gew.-%, besonders bevorzugt > 0 bis 25 Gew-%, höchst bevorzugt > 0 bis 15 Gew.-% (jeweils bezogen auf das Gewicht der Reaktionsmischung).

Bei Reaktionsführung in einem Rohrreaktor wird die gemäß dem Schritt (α) getrocknete Katalysator-Starter-Mischung oder die gemäß den Schritten (α) und (β) aktivierte Katalysator-Suspensionsmittel-Mischung und gegebenenfalls weitere H-funktionelle Starterverbindung sowie Alkylenoxide und Kohlendioxid kontinuierlich durch ein Rohr gepumpt. Bei Verwendung einer gemäß dem Schritt (α) getrockneten Katalysator-Suspensionsmittel-Mischung erfolgt die Aktivierung gemäß Schritt (β) im ersten Teil des Rohrreaktors und die (Co-)Polymerisation gemäß Schritt (γ) im zweiten Teil des Rohrreaktors. Ein Teil der erhaltenen Reaktionsmischung kann für die Aktivierung gemäß Schritt (β) in den ersten Teil des Rohrreaktors oder die (Co)-Polymerisation gemäß Schritt (γ) in den zweiten Teil des Rohrreaktors zurückgeführt werden. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang dem Reaktor angeordnet sind, in dem Reaktor eingebracht werden. Eine Teilmenge des Epoxids kann am Eingang des Reaktors eingebracht werden. Die Restmenge des Epoxids wird bevorzugt über mehrere Dosierstellen, die entlang dem Reaktor angeordnet sind, in den Reaktor eingebracht. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern. Bevorzugt wird durch die Mischelemente zudosiertes $CO_2$ und/oder Alkylenoxid mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Polyethercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

In einer bevorzugten Ausführungsform wird vor Beginn der Polymerisationsreaktion der zweite Reaktor, in dem der Polymerisationsschritt durchgeführt wird, mit einem als Produkt erhaltenen Polyethercarbonatpolyol befüllt. Dazu kann in dem zweiten Reaktor, in dem der Polymerisationsschritt durchgeführt wird, zunächst im Semi-batch Betrieb ein Produkt hergestellt werden und dann bei Erreichen des maximalen Füllstandes auf einen kontinuierlichen Betrieb umgestellt werden. Alternativ kann der zweite Reaktor, in dem der Polymerisationsschritt durchgeführt wird, mit dem Produktgemisch einer vorher durchgeführten Polymerisation befüllt werden.

Schritt (δ)

Optional kann in einem Schritt (δ) das in Schritt (γ) kontinuierlich entfernte Reaktionsgemisch, welches im allgemeinen einen Gehalt von 0,05 Gew.-% bis 10 Gew.-% Alkylenoxid enthält, in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel dienen.

Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Die vorliegende Erfindung betrifft ebenfalls ein Polyethercarbonatpolyol, erhalten durch ein erfindungsgemäßes Verfahren. Die erfindungsgemäß erhaltenen Polyethercarbonatpolyole haben vorzugsweise eine OH-Funktionalität (d.h. durchschnittliche Anzahl von OH-Gruppen pro Molekül) von mindestens 0,8, bevorzugt von 1 bis 8, besonders bevorzugt von 1 bis 6 und ganz besonders bevorzugt von 2 bis 4. Das Molekulargewicht der erhaltenen Polyethercarbonatpolyole (GPC) beträgt im allgemeinen mindestens 400 g/mol bis 1000000 g/mol, bevorzugt 400 bis 100000 g/mol und besonders bevorzugt 500 bis 6000 g/mol.

Die nach dem erfindungsgemäßen Verfahren erhaltenen Polyethercarbonatpolyole können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Starterverbindung basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

**Beispiele**

Die Erfindung wird anhand der nachfolgenden Beispiele näher erläutert, ohne jedoch darauf beschränkt zu sein. Es zeigen:

Eingesetzte H-funktionelle Starterverbindungen (Starter):

PET-1: trifunktionelles Poly(oxypropylen)polyol mit einer OH-Zahl von 240 mg KOH/g

PET-2: difunktionelles Poly(oxypropylen)polyol mit einer OH-Zahl von 112,2 mg KOH/g

Propylenglykol: Diol mit einer OH-Zahl von 1475 mg KOH/g

Der DMC-Katalysator wurde hergestellt nach Beispiel 6 von WO-A 01/80994.

Die Angaben zum Druck beziehen sich auf den absoluten Druck.

Der in den Beispielen für die Herstellung eines Gemisches aus aktiviertem DMC-Katalysator und Starterverbindung eingesetzte 1000 ml Druckreaktor hatte eine Höhe (innen) von 13,72 cm und einen Innendurchmesser von 9,53 cm. Der Reaktor war ausgestattet mit einem elektrischen Heizmantel (1000 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 20°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [Schritt (β)] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [Schritt (β)] wurde beobachtet über eine reduzierte Wärmeleistung

des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion [Schritt (γ)] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf mit einem Durchmesser von 50 mm und einer Höhe von 20 mm. An jedem Ende des Arms waren drei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

Die Polymerisationsreaktionen wurden in einer Anlage der Fa. Parr durchgeführt. Die Anlage bestand aus drei hintereinandergeschalteten Druckbehältern (Reaktor R1, Reaktor R2 und Reaktor R3).

Reaktor R1 (300 ml Volumen) hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 3,17 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr für Inertgas (Argon) einem Einleitrohr für Propylenoxid, sowie einem Thermofühler mit 3,17 mm Durchmesser ausgestattet, die bis 3 mm über den Boden in den Reaktor ragten. Weiterhin war der Reaktor mit einem Einleitrohr für Inertgas oder Kohlendioxid sowie einem Anschluss für Vakuum ausgestattet, die in die Gasphase des Reaktors führten. Der Reaktor wurde über einen Impellerrührer gerührt, bei dem es sich um eine Schrägblatt-Turbine handelte, bei dem auf der Rührwelle im Abstand von 7 mm insgesamt zwei Rührstufen mit jeweils vier Rührflügeln (45°) angebracht waren, die einen Durchmesser von 35 mm und eine Höhe von 10 mm aufwiesen. Über einen Massenflussregler wurde die flüssige Phase in den Reaktor R2 dosiert.

Reaktor R2 (300 ml Volumen) hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem spiralförmig gebogenen Rohr gemäß Fig. 2 mit 3,17 mm Außendurchmesser, das mit Kühlwasser von ca. 10°C durchströmt wurde. Der Wasserstrom wurde über ein Magnetventil ein- und ausgeschaltet. Weiterhin war der Reaktor mit einem Einleitrohr für Inertgas (Argon) einem Einleitrohr für Propylenoxid, sowie einem Thermofühler mit 3,17 mm Durchmesser ausgestattet, die wie in Fig. 2 gezeigt in den Reaktor ragten. Weiterhin war der Reaktor mit einem Einleitrohr für Inertgas oder Kohlendioxid sowie einem Anschluss für Vakuum ausgestattet, die in die Gasphase des Reaktors führten. Der Reaktor wurde über einen Impeller-Rührer gerührt, der sich in der Mitte eines Strömungsleitbleches befand. Bei dem Impeller-Rührer handelte es sich um eine Schrägblatt-Turbine, bei der auf der Rührwelle eine Rührstufe mit vier Rührflügeln (45°) angebracht war, die einen Durchmesser von 35 mm und eine Höhe von 10 mm aufwies. Über ein beheiztes Rohr wurde der Überlauf in den Reaktor R3 geführt.

Reaktor R3 (1700 ml Volumen) hatte eine Höhe (innen) von 28,5 cm und einen Innendurchmesser von 9,82 cm. Der Reaktor war ausgestattet mit einem elektrischen Heizmantel (510 Watt maximale Heizleistung). Die Gegenkühlung bestand in einem spiralförmig gebogenen Tauchrohr mit 6,35 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Thermofühler mit 3,17 mm Durchmesser ausgestattet, das bis 3 mm über den Boden in den Reaktor ragte. Der Reaktor wurde über einen Spiral-Rührer gerührt, bei dem auf der Rührwelle ein Spiralförmig ausgebildeter viereckiger Metallstab mit einem Querschnitt von 12,4 x 45 mm angebracht war, wobei die Spirale einen Außendurchmesser von 6 cm, einen Innendurchmesser von 4,6 cm und eine Höhe von 14 cm aufwies. Über einen Vordruckregler wurde die Gasphase in die Abluft abgeführt.

Für die Aufnahme der Propylenoxid-Konzentration während der Katalysatoraktivierung in Reaktor R1 und dem Umsatz an Propylenoxid im (Co-)Polymerisationsreaktor R2 wurde ein Bruker MATRIX-MF Spektrometer ausgestattet mit 3,17 mm ATR-IR Faseroptik-Sonden verwendet. Die ATR-IR Faseroptik-Sonden (90° Diamant-Prisma mit 1 x 2mm Grundfläche und 1 mm Höhe als ATR Element, 2 x 45° Reflektion des IR Strahls, IR Strahl über Lichtleitfaser eingekoppelt) wurden so in die Reaktoren eingebaut, dass der am Ende der 3,17 mm ATR Faseroptik-Sonde befindliche Diamant vollständig in die Reaktionsmischung eintauchte. IR Spektren (Mittelwert von 100 Scans) wurden alle 60 Sekunden im Bereich 4000-650 $cm^{-1}$ mit einer Auflösung von 4 $cm^{-1}$ aufgenommen. Die Propylenoxid-Konzentration wurde über Aufnahme der charakteristischen Bande für Propylenoxid bei 830 $cm^{-1}$ verfolgt. Eine Abnahme der Intensität der Bande bei 830 $cm^{-1}$ auf 5% des Maximalwertes wurde für die Katalysatoraktivierung als vollständiger Umsatz von Propylenoxid gewertet. Bei der Berechnung des Umsatzes an Propylenoxid im Co-Polymerisationsreaktor R2 wurde die Volumenexpansion, die durch gelöstes $CO_2$ hervorgerufen wird, berücksichtigt (13.4 % bei 50 bar). Weiterhin wurde nach Erreichen des stationären Zustandes (*steady state*) über ein Ventil eine Probe aus Reaktor R2 entnommen. Die Charakterisierung des Reaktionsgemisches erfolgte durch $^1$H-NMR Spektroskopie und Gelpermeationschromatographie.

Die spezifische Produktleistung des Reaktors P wurde gemäß der nachfolgenden Formel als der Quotient aus

dem Massenstrom an eingesetztem Propylenoxid $\dot{m}_{PO}$ und Starterverbindung $\dot{m}_S$ multipliziert mit dem erhaltenen Umsatz an Propylenoxid $X_{PO}$ und dem Volumen der flüssigen Phase in Reaktor R2 ($V_{fl}$ = 0,175 l) bestimmt. Die spezifische Produktleistung ist in kg/(m³·h) angegeben.

$$P = \frac{(\dot{m}_{PO} + \dot{m}_S) \times X_{PO}}{V_{fl}}$$

Bei der Copolymerisation resultierte neben dem cyclischen Propylencarbonat das Polyethercarbonatpolyol, welches die nachfolgend gezeigten Polycarbonat- und Polyether-Einheiten enthält:

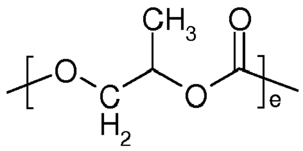

bzw.

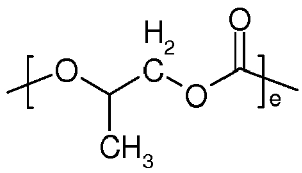

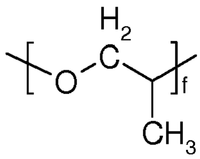

bzw.

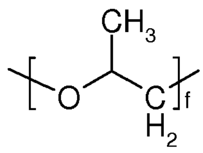

Das Verhältnis der Menge an cyclischem Propylencarbonat zu Polyethercarbonatpolyol (Selektivität) und das molare Verhältnis von Carbonatgruppen zu Ethergruppen im Polyethercarbonatpolyol (Verhältnis e/f) sowie der Anteil des umgesetzten Propylenoxids (C in mol%) wurden mittels $^1$H-NMR Spektroskopie bestimmt. Die Probe wurde jeweils in deuteriertem Chloroform gelöst und auf einem Spektrometer der Firma Bruker (AV400, 400 MHz) vermessen. Die relevanten Resonanzen im $^1$H-NMR Spektrum (bezogen auf TMS = 0 ppm), die zur Integration verwendet wurden, sind wie folgt:

I1: 1,11 - 1,17: Methylgruppe der Polyether-Einheiten, Fläche der Resonanz entspricht drei H Atomen

I2: 1,25 - 1,32: Methylgruppe der Polycarbonat-Einheiten, Fläche der Resonanz entspricht drei H Atomen

I3: 1,45 - 1,49: Methylgruppe des cyclischen Carbonats, Fläche der Resonanz entspricht drei H Atomen

I4: 2,95 - 2,99: CH Gruppe für freies, nicht abreagiertes Propylenoxid, Fläche der Resonanz entspricht einem H Atom

Angegeben sind das molare Verhältnis der Menge an cyclischem Propylencarbonat zu Carbonat-Einheiten im Polyethercarbonatpolyol (Selektivität, g/e) und das molare Verhältnis von Carbonatgruppen zu Ethergruppen im Polyethercarbonatpolyol (e/f) sowie der Anteil des umgesetzten Propylenoxids (C in mol%).

Unter Berücksichtigung der relativen Intensitäten wurden die Werte wie folgt berechnet:

Molares Verhältnis der Menge an cyclischem Propylencarbonat zu Carbonat-Einheiten im Polyethercarbonatpolyol (Selektivität, g/e):

$$g/e = I3 / I2$$

Molares Verhältnis von Carbonatgruppen zu Ethergruppen im Polymer (e/f):

$$e/f = I2 / I1$$

Der molare Anteil des umgesetzten Propylenoxids (C in mol%) bezogen auf die Summe der bei der Aktivierung und der Copolymerisation eingesetzten Menge an Propylenoxid, berechnet sich nach der Formel:

$$C = [((I1/3)+(I2/3)+(I3/3)) / ((I1/3)+(I2/3)+(I3/3)+I4)] * 100\%$$

Das Zahlenmittel $M_n$ und das Gewichtsmittel $M_w$ des Molekulargewichts der entstandenen Polymere wurde mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1.0 ml/min; Säulen: 2xPSS SDV linear M, 8x300 mm, 5 $\mu$m; RID-Detektor). Dabei wurden Polystyrolproben bekannter Molmasse zur Kalibrierung verwendet. Um den Anteil der höhermolekularen Ketten genauer zu definieren wurde das Molekulargewicht $M_{90}$ berechnet, unterhalb dessen 90% aller Kettenlängen zu finden sind. Angegeben ist das Verhältnis von $M_{90}$ zu $M_n$. Je größer das Verhältnis, desto mehr lange Ketten sind in der Probe enthalten.

Anschließend wurde die entnommene Probe der Reaktionsmischung mit Dichlormethan (20 ml) aufgenommen und die Mischung durch einen Fallfilmverdampfer geleitet. Die Mischung (0,1 kg in 1 h) lief entlang der inneren Wand eines von außen auf 120°C beheizten Rohres mit 70 mm Durchmesser und 200 mm Länge herab, wobei die Mischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von <1 mbar eingestellt. Die von leicht flüchtigen Bestandteilen (nicht umgesetzte Epoxide, cyclisches Carbonat, Dichlormethan) gereinigte Reaktionsmischung wurde am unteren Ende des beheizten Rohres in einer Vorlage aufgefangen.

Die Charakterisierung des Polyethercarbonatpolyols erfolgte durch $^1$H-NMR Spektroskopie sowie Bestimmung der OH Zahl und Viskosität:

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mg KOH/g" bezieht sich auf mg[KOH]/g[Polyethercarbonatpolyol].

Die Bestimmung der Viskosität erfolgte auf einem Physica MCR 501 Rheometer der Fa. Anton Paar. Es wurde eine Kegel-Platte-Konfiguration mit einem Abstand von 1 mm gewählt (Messsystem DCP25). Das Polyethercarbonatpolyol (0,1 g) wurde auf der Rheometerplatte aufgebracht und bei 25°C einer Scherung von 0,01 bis 1000 1/s unterworfen und für 10 min alle 10 s die Viskosität gemessen. Angegeben ist die über alle Messpunkte gemittelte Viskosität.

Aus dem $CO_2$-Gehalt, der Hydroxylzahl und dem eingesetzten Starter wurde für das jeweilige Polyethercarbonatpolyol jeweils das Verhältnis von e/f (siehe Formel (Ia)) berechnet.

**Beispiel 1: Kontinuierliches Verfahren zur Copolymerisation von Propylenoxid und $CO_2$ unter Einsatz eines unter $CO_2$ aktivierten DMC-Katalysators**

<u>Prozessschritte:</u>

*Schritt ($\alpha$) Herstellung einer Mischung aus DMC-Katalysator und Starterverbindung:*

In einem 300 ml Druckreaktor (Reaktor R1) ausgestattet mit Impellerrührer wurde eine Mischung aus DMC-Katalysator (0,1575 g) und PET-1 (200,81 g) vorgelegt. Der Reaktor wurde geschlossen, der Druck im Reaktor R1 auf 50 mbar reduziert und der Reaktor auf 130°C aufgeheizt. Anschließend wurde ein leichter Ar-Strom am Boden des Reaktors in die Reaktionsmischung eingeleitet. Durch Regeln des Ar-Stroms und gleichzeitiges Entfernen des Gases aus dem Reaktor R1 mit einer Pumpe wurde der Druck im Reaktor auf 50 mbar eingestellt und die Mischung für 30 min bei 130°C unter reduziertem Druck (50 mbar) und leichtem Ar-Strom gerührt (500 U/min).

*Schritt ($\beta$) (Aktivierung):*

Reaktor R1 wurde mit 50 bar $CO_2$ gefüllt, wodurch die Temperatur im Reaktor R1 leicht absank. Die Temperatur wurde auf 130°C nachgeregelt und während der nachfolgenden Schritte der Druck im Reaktor durch Nachdosieren von $CO_2$ bei 50 bar gehalten. Es wurden 19,4 g Propylenoxid mit Hilfe einer HPLC-Pumpe (10 mL/min) in den Reaktor R1 zu dem Gemisch aus Schritt ($\alpha$) dosiert. Die Abnahme der Konzentration des Propylenoxids wurde über IR Spektroskopie verfolgt. Die Reaktionsmischung wurde bis zum vollständigen Umsatz des Propylenoxids (*ca.* 15 min) gerührt (500

U/min). Anschließend wurden noch zwei weitere Male 19,4 g Propylenoxid mit Hilfe der HPLC-Pumpe (10 ml/min) zu dosiert und die Reaktionsmischung jeweils bis zum vollständigen Umsatz des Propylenoxids (*ca.* 15 min) gerührt (500 U/min). Das Auftreten einer kurzzeitig erhöhten Wärmeentwicklung im Reaktor nach Zugabe des Propylenoxids bestätigte die Aktivierung des Katalysators. Anschließend wurde die Mischung aus DMC-Katalysator und Starterverbindung in Reaktor R1 auf Raumtemperatur (25°C) gekühlt und die Mischung mit 100 U/min gerührt. Der Druck in Reaktor R1 wurde mit Argon, das in die Gasphase eingeleitet wird, auf 100 bar eingestellt und während der nachfolgenden Schritte durch Nachdosieren bei 100 bar gehalten.

*Schritt (γ) ((Co-)Polymerisation):*

In einem 300 ml Druckreaktor (Reaktor R2) ausgestattet mit Impellerrührer und Strömungsleitblech wurde eine Mischung aus DMC-Katalysator (0,0549 g) und PET-1 (70 g) vorgelegt. Der Reaktor R2 wurde geschlossen, der Druck im Reaktor R2 auf 50 mbar reduziert und der Reaktor R2 auf 130°C aufgeheizt. Anschließend wurde ein leichter Ar-Strom am Boden des Reaktors R2 in die Reaktionsmischung eingestellt. Durch Regeln des leichten Ar-Stroms und gleichzeitiges Entfernen des Gases mit einer Pumpe wurde der Druck im Reaktor R2 auf 50 mbar eingestellt und die Mischung für 30 min bei 130°C unter reduziertem Druck (50 mbar) und leichtem Ar-Strom gerührt (500 U/min). Es wurden langsam (über ≥15 min) 50 bar $CO_2$ aufgepresst. Während der nachfolgenden Schritte wurde der Druck im Reaktor R2 durch Nachdosieren von $CO_2$ bei 50 bar gehalten. Es wurden 7 g Propylenoxid mit Hilfe eines Massenflussreglers (200 g/h) zu dosiert. Die Abnahme der Konzentration des Propylenoxids wurde über IR Spektroskopie verfolgt. Die Reaktionsmischung wurde bis zum vollständigen Umsatz des Propylenoxids (*ca.* 15 min) gerührt (500 U/min). Anschließend wurden noch zwei weitere Male 7 g Propylenoxid mit Hilfe eines Massenflussreglers (200 g/h) zu dosiert und die Reaktionsmischung jeweils bis zum vollständigen Umsatz des Propylenoxids (*ca.* 15 min) gerührt (500 U/min). Das Auftreten einer kurzzeitig erhöhten Wärmeentwicklung im Reaktor nach Zugabe des Propylenoxids bestätigte die Aktivierung des Katalysators. Anschließend wurde die Temperatur der Mischung in Reaktor R2 auf 100°C abgesenkt.

Anschließend wurde das Ventil am Auslass von Reaktor R2 geöffnet. In die Gasphase von Reaktor R2 wurde kontinuierlich $CO_2$ mit einem Fluss von 20 g/h eingeleitet. Der Auslassstrom wurde über einen weiteren Druckbehälter (Reaktor R3) und einen Vordruckregler abgeleitet. Der Druck in den Reaktoren 2 und 3 wurde über den Vordruckregler auf 50 bar eingestellt. Über einen Massenflussregler wurden kontinuierlich 30 g/h Propylenoxid in Reaktor R2 dosiert. Sobald der Überlauf von Reaktor R2 (bei 175 ml Flüssigkeitsvolumen) erreicht wurde, wurde der kontinuierliche Propylenoxid-Strom auf 20,6 g/h heruntergeregelt. Gleichzeitig wurde die Mischung aus Starterverbindung und aktiviertem DMC-Katalysator aus Reaktor R1 kontinuierlich mit einer Rate von 10,0 g/h in den Reaktor R2 eingeleitet. Der Überlauf aus Reaktor R2 wurden in den Reaktor R3 eingeleitet. Das Produktgemisch wurde in Reaktor R3 bei 100°C unter Druck aufgefangen und bei 200 U/min gerührt.

Nach 24 Stunden Betriebsdauer wurde über ein Ventil eine Probe der flüssigen Phase aus Reaktor R2 (Reaktionsgemisch) entnommen und analysiert.

*Charakterisierung des Reaktionsgemisches in Reaktor R2:*

Die IR-spektroskopische Untersuchung des Reaktionsgemisches in Reaktor R2 direkt vor Entnahme der Probe ergab einen Umsatz an Propylenoxid von 97,3 %.

Die spezifische Produktleistung des Reaktors R2 betrug 170,2 [kg/($m^3$·h)].

*Charakterisierung des im stationären Zustand aus Reaktor R2 entnommenen Reaktionsgemisches:*

Die NMR spektroskopische Untersuchung ergab eine Selektivität g/e von 0,11.

Das molare Verhältnis von Carbonatgruppen zu Ethergruppen im Polyethercarbonatpolyol e/f betrug 23,72/76,28.

Das erhaltene Polyethercarbonatpolyol wies ein Molekulargewicht $M_n$ = 3755 g/mol, $M_w$ = 4512 g/mol und eine Polydispersität von 1,20 auf. Das Molekulargewicht $M_{90}$ betrug 6880 g/mol.

*Charakterisierung des Produktgemisches aus Reaktor R3 nach Entfernen der flüchtigen Bestandteile im Fallfilmverdampfer:*

OH Zahl: 53,7 mg KOH/g.

Viskosität: 5,0 Pa s.

**Beispiel 2 (Vergleich): Kontinuierliches Verfahren zur Copolymerisation von Propylenoxid und $CO_2$ unter Einsatz eines nicht aktivierten DMC-Katalysators**

Prozessschritte:

*Herstellung einer Mischung aus DMC-Katalysator und Starterverbindung:*

In einem 300 ml Druckreaktor (Reaktor R1) ausgestattet mit Impellerrührer wurde eine Mischung aus DMC-Katalysator (0,1971 g) und PET-1 (249,97 g) vorgelegt. Der Reaktor wurde geschlossen und die Mischung aus DMC-Katalysator und Starterverbindung in Reaktor R1 bei Raumtemperatur (25°C) über Nacht mit 100 U/min gerührt. Der Druck in Reaktor R1 wurde mit Argon, das in die Gasphase eingeleitet wird, auf 100 bar eingestellt und während der nachfolgenden Schritte durch Nachdosieren bei 100 bar gehalten.

*Schritt ($\gamma$) ((Co-)Polymerisation):*

In einem 300 ml Druckreaktor (Reaktor R2) ausgestattet mit Impellerrührer und Strömungsleitblech wurde eine Mischung aus DMC-Katalysator (0,0631 g) und PET-1 (80 g) vorgelegt. Der Reaktor R2 wurde geschlossen, der Druck im Reaktor R2 auf 50 mbar reduziert und der Reaktor R2 auf 130°C aufgeheizt. Anschließend wurde ein leichter Ar-Strom am Boden des Reaktors R2 in die Reaktionsmischung eingestellt. Durch Regeln des leichten Ar-Stroms und gleichzeitiges Entfernen des Gases mit einer Pumpe wurde der Druck im Reaktor R2 auf 50 mbar eingestellt und die Mischung für 30 min bei 130°C unter reduziertem Druck (50 mbar) und leichtem Ar-Strom gerührt (500 U/min). Es wurden langsam (über ≥15 min) 50 bar $CO_2$ aufgepresst. Während der nachfolgenden Schritte wurde der Druck im Reaktor R2 durch Nachdosieren von $CO_2$ bei 50 bar gehalten. Es wurden 8 g Propylenoxid mit Hilfe eines Massenflussreglers (200 g/h) zu dosiert. Die Abnahme der Konzentration des Propylenoxids wurde über IR Spektroskopie verfolgt. Die Reaktionsmischung wurde bis zum vollständigen Umsatz des Propylenoxids (*ca.* 15 min) gerührt (500 U/min). Anschließend wurden noch zwei weitere Male 8 g Propylenoxid mit Hilfe eines Massenflussreglers (200 g/h) zu dosiert und die Reaktionsmischung jeweils bis zum vollständigen Umsatz des Propylenoxids (*ca.* 15 min) gerührt (500 U/min). Das Auftreten einer kurzzeitig erhöhten Wärmeentwicklung im Reaktor R2 nach Zugabe des Propylenoxids bestätigte die Aktivierung des Katalysators. Anschließend wurde die Temperatur der Mischung in Reaktor R2 auf 100°C abgesenkt.

Anschließend wurde das Ventil am Auslass von Reaktor R2 geöffnet. In die Gasphase von Reaktor R2 wurde kontinuierlich $CO_2$ mit einem Fluss von 20 g/h eingeleitet. Der Auslassstrom wurde über einen weiteren Druckbehälter (Reaktor R3) und einen Vordruckregler abgeleitet. Der Druck in den Reaktoren 2 und 3 wurde über den Vordruckregler auf 50 bar eingestellt. Über einen Massenflussregler wurden kontinuierlich 30 g/h Propylenoxid in Reaktor R2 dosiert. Sobald der Überlauf von Reaktor R2 (bei 175 ml Flüssigkeitsvolumen) erreicht wurde, wurde der kontinuierliche Propylenoxid-Strom auf 22,9 g/h heruntergeregelt. Gleichzeitig wurde die Mischung aus Starterverbindung und nicht aktiviertem DMC-Katalysator aus Reaktor R1 kontinuierlich mit einer Rate von 7,8 g/h in den Reaktor R2 eingeleitet. Der Überlauf aus Reaktor R2 wurden in den Reaktor R3 eingeleitet. Das Produktgemisch wurde in Reaktor R3 bei 100°C unter Druck aufgefangen und bei 200 U/min gerührt.

Nach 24 Stunden Betriebsdauer wurde über ein Ventil eine Probe der flüssigen Phase aus Reaktor R2 entnommen und analysiert.

*Charakterisierung des Reaktionsgemisches in Reaktor R2:*

Die IR-spektroskopische Untersuchung des Reaktionsgemisches ergab einen Umsatz an Propylenoxid von 92,5 %.

Die spezifische Produktleistung des Reaktors R2 betrug 161,8 [kg/($m^3 \cdot h$)].

*Charakterisierung des im stationären Zustand aus Reaktor R2 entnommenen Reaktionsgemisches:*

Die NMR spektroskopische Untersuchung ergab eine Selektivität g/e von 0,06.

Das molare Verhältnis von Carbonatgruppen zu Ethergruppen im Polyethercarbonatpolyol e/f betrug 25,93/74,07.

Das erhaltene Polyethercarbonatpolyol wies ein Molekulargewicht $M_n$ = 3030 g/mol, $M_w$ = 3983 g/mol und eine Polydispersität von 1,31 auf. Das Molekulargewicht $M_{90}$ betrug 6214 g/mol.

*Charakterisierung des Produktgemisches aus Reaktor R3 nach Entfernen des cyclischen Carboynats im Fallfilmverdampfer:*

OH Zahl: 54,3 mg KOH/g.

Viskosität: 5,7 Pa s.

**Beispiel 3: Kontinuierliches Verfahren zur Copolymerisation von Propylenoxid und $CO_2$ unter Einsatz eines unter $CO_2$ aktivierten DMC-Katalysators**

Prozessschritte:

*Schritt ($\alpha$): Herstellung einer Mischung aus DMC-Katalysator und Starterverbindung:*

In einem 1000 ml Druckreaktor (Reaktor R1) ausgestattet mit Gaseintragsrührer wurde eine Mischung aus DMC-Katalysator (0,2237 g) und PET-2 (600,13 g) vorgelegt. Der Reaktor R1 wurde geschlossen, der Druck in Reaktor R1 auf 50 mbar reduziert und der Reaktor auf 130°C aufgeheizt. Anschließend wurde ein leichter Ar-Strom am Boden des Reaktors R1 in die Reaktionsmischung eingeleitet. Durch Regeln des Ar-Stroms und gleichzeitiges Entfernen des Gases aus dem Reaktor mit einer Pumpe wurde der Druck im Reaktor R1 auf 50 mbar eingestellt und die Mischung für 30 min bei 130°C unter reduziertem Druck (50 mbar) und leichtem Ar-Strom gerührt (500 U/min).

*Schritt ($\beta$) (Aktivierung):*

Reaktor R1 wurde mit 50 bar $CO_2$ gefüllt, wodurch die Temperatur im Reaktor R1 leicht absank. Die Temperatur wurde auf 130°C nachgeregelt und während der nachfolgenden Schritte der Druck im Reaktor R1 durch Nachdosieren von $CO_2$ bei 50 bar gehalten. Es wurden 60,6 g Propylenoxid mit Hilfe einer HPLC-Pumpe (30 mL/min) in den Reaktor R1 zu dem Gemisch aus Schritt ($\alpha$) dosiert. Die Abnahme der Konzentration des Propylenoxids wurde über IR Spektroskopie verfolgt. Die Reaktionsmischung wurde bis zum vollständigen Umsatz des Propylenoxids (*ca.* 15 min) gerührt (500 U/min). Anschließend wurden noch zwei weitere Male 60,6 g Propylenoxid mit Hilfe der HPLC-Pumpe (30 ml/min) in den Reaktor R1 dosiert und die Reaktionsmischung jeweils bis zum vollständigen Umsatz des Propylenoxids (*ca.* 15 min) gerührt (500 U/min). Das Auftreten einer kurzzeitig erhöhten Wärmeentwicklung im Reaktor R1 nach Zugabe des Propylenoxids zeigte die Aktivierung des Katalysators an. Anschließend wurde die Mischung aus DMC-Katalysator und Starterverbindung auf Raumtemperatur (25°C) gekühlt, in den 300 ml Druckreaktor (Reaktor R1) überführt und die Mischung mit 100 U/min gerührt. Der Druck in Reaktor R1 wurde mit Argon, das in die Gasphase eingeleitet wird, auf 100 bar eingestellt und während der nachfolgenden Schritte durch Nachdosieren bei 100 bar gehalten. Nach 12 Stunden wurde die Mischung in dem 300 ml Druckreaktor (Reaktor R1) nachgefüllt.

*Schritt (y) ((Co-)Polymerisation):*

In einem 300 ml Druckreaktor (Reaktor R2) ausgestattet mit Impellerrührer und Strömungsleitblech wurde eine Mischung aus DMC-Katalysator (0,0231 g) und PET-2 (80 g) vorgelegt. Der Reaktor R2 wurde geschlossen, der Druck im Reaktor R2 auf 50 mbar reduziert und der Reaktor auf 130°C aufgeheizt. Anschließend wurde ein leichter Ar-Strom am Boden des Reaktors R2 in die Reaktionsmischung eingestellt. Durch Regeln des leichten Ar-Stroms und gleichzeitiges Entfernen des Gases mit einer Pumpe wurde der Druck im Reaktor R2 auf 50 mbar eingestellt und die Mischung für 30 min bei 130°C unter reduziertem Druck (50 mbar) und leichtem Ar-Strom gerührt (500 U/min). Es wurden langsam (über $\geq$15 min) 50 bar $CO_2$ aufgepresst. Während der nachfolgenden Schritte wurde der Druck im Reaktor R2 durch Nachdosieren von $CO_2$ bei 50 bar gehalten. Es wurden 8 g Propylenoxid mit Hilfe eines Massenflussreglers (200 g/h) zu dosiert. Die Abnahme der Konzentration des Propylenoxids wurde über IR Spektroskopie verfolgt. Die Reaktionsmischung wurde bis zum vollständigen Umsatz des Propylenoxids (*ca.* 15 min) gerührt (500 U/min). Anschließend wurden noch zwei weitere Male 8 g Propylenoxid mit Hilfe eines Massenflussreglers (200 g/h) zu dosiert und die Reaktionsmischung jeweils bis zum vollständigen Umsatz des Propylenoxids (*ca.* 15 min) gerührt (500 U/min). Das Auftreten einer kurzzeitig erhöhten Wärmeentwicklung im Reaktor nach Zugabe des Propylenoxids zeigte die Aktivierung des Katalysators an. Anschließend wurde die Temperatur der Mischung in Reaktor R2 auf 100°C abgesenkt.

Anschließend wurde das Ventil am Auslass von Reaktor R2 geöffnet. In die Gasphase von Reaktor R2 wurde kontinuierlich $CO_2$ mit einem Fluss von 20 g/h eingeleitet. Der Auslassstrom wurde über einen weiteren Druckbehälter (Reaktor R3) und einen Vordruckregler abgeleitet. Der Druck in den Reaktoren 2 und 3 wurde über den Vordruckregler

auf 50 bar eingestellt. Über einen Massenflussregler wurden kontinuierlich 30 g/h Propylenoxid in Reaktor R2 dosiert. Sobald der Überlauf von Reaktor R2 (bei 175 ml Flüssigkeitsvolumen) erreicht wurde, wurde der kontinuierliche Propylenoxid-Strom auf 8,61 g/h heruntergeregelt. Gleichzeitig wurde die Mischung aus Starterverbindung und aktiviertem DMC-Katalysator aus Reaktor R1 kontinuierlich mit einer Rate von 20,0 g/h in den Reaktor R2 eingeleitet und der $CO_2$ Strom auf einen Fluss von 15 g/h geregelt. Der Überlauf aus Reaktor R2 wurden in den Reaktor R3 eingeleitet. Das Produktgemisch wurde in Reaktor R3 bei 100°C unter Druck aufgefangen und bei 200 U/min gerührt.

Nach 24 Stunden Betriebsdauer wurde über ein Ventil eine Probe der flüssigen Phase aus Reaktor R2 (Reaktionsgemisch) entnommen und analysiert.

*Charakterisierung des Reaktionsgemisches in Reaktor R2:*

Die IR-spektroskopische Untersuchung des Reaktionsgemisches in Reaktor R2 direkt vor Entnahme der Probe ergab einen Umsatz an Propylenoxid von 99,3 %.

Die spezifische Produktleistung des Reaktors R2 betrug 162,4 [kg/($m^3 \cdot h$)].

*Charakterisierung des im stationären Zustand aus Reaktor R2 entnommenen Reaktionsgemisches:*

Die NMR spektroskopische Untersuchung ergab eine Selektivität g/e von 0,17.

Das molare Verhältnis von Carbonatgruppen zu Ethergruppen im Polyethercarbonatpolyol e/f betrug 15,08/84,92.

Das erhaltene Polyethercarbonatpolyol wies ein Molekulargewicht $M_n$ = 2734 g/mol, $M_w$ = 2992 g/mol und eine Polydispersität von 1,09 auf. Das Molekulargewicht $M_{90}$ betrug 4212 g/mol.

*Charakterisierung des Produktgemisches aus Reaktor R3 nach Entfernen der flüchtigen Bestandteile im Fallfilmverdampfer:*

OH Zahl: 55,5 mg KOH/g.
Viskosität: 0,9 Pa s.

**Beispiel 4 (Vergleich): Kontinuierliches Verfahren zur Copolymerisation von Propylenoxid und $CO_2$ unter Einsatz eines nicht aktivierten DMC-Katalysators**

<u>Prozessschritte:</u>

*Herstellung einer Mischung aus DMC-Katalysator und Starterverbindung:*

In einem 300 ml Druckreaktor (Reaktor R1) ausgestattet mit Impellerrührer wurde eine Mischung aus DMC-Katalysator (0,0903 g) und PET-2 (250,0 g) vorgelegt. Der Reaktor wurde geschlossen und die Mischung aus DMC-Katalysator und Starterverbindung in Reaktor R1 bei Raumtemperatur (25°C) mit 100 U/min gerührt. Der Druck in Reaktor R1 wurde mit Argon, das in die Gasphase eingeleitet wird, auf 100 bar eingestellt und während der nachfolgenden Schritte durch Nachdosieren bei 100 bar gehalten. Nach 12 Stunden wurde die Mischung aus DMC-Katalysator (0,0911 g) und PET-2 (250,0 g) in dem 300 ml Druckreaktor (Reaktor R1) nachgefüllt.

*Schritt ($\gamma$) (Copolymerisation):*

In einem 300 ml Druckreaktor (Reaktor R2) ausgestattet mit Impellerrührer und Strömungsleitblech wurde eine Mischung aus DMC-Katalysator (0,0289 g) und PET-2 (80 g) vorgelegt. Der Reaktor R2 wurde geschlossen, der Druck im Reaktor auf 50 mbar reduziert und der Reaktor R2 auf 130°C aufgeheizt. Anschließend wurde ein leichter Ar-Strom am Boden des Reaktors R2 in die Reaktionsmischung eingestellt. Durch Regeln des leichten Ar-Stroms und gleichzeitiges Entfernen des Gases mit einer Pumpe wurde der Druck im Reaktor R2 auf 50 mbar eingestellt und die Mischung für 30 min bei 130°C unter reduziertem Druck (50 mbar) und leichtem Ar-Strom gerührt (500 U/min). Es wurden langsam (über ≥15 min) 50 bar $CO_2$ aufgepresst. Während der nachfolgenden Schritte wurde der Druck im Reaktor R2 durch Nachdosieren von $CO_2$ bei 50 bar gehalten. Es wurden 8 g Propylenoxid mit Hilfe eines Massenflussreglers (200 g/h) zu dosiert. Die Abnahme der Konzentration des Propylenoxids wurde über IR Spektroskopie verfolgt. Die Reaktionsmischung wurde bis zum vollständigen Umsatz des Propylenoxids (*ca.* 15 min) gerührt (500 U/min). Anschließend wurden noch zwei weitere Male 8 g Propylenoxid mit Hilfe eines Massenflussreglers (200 g/h) zu dosiert und die Reaktionsmischung jeweils bis zum vollständigen Umsatz des Propylenoxids (*ca.* 15 min) gerührt (500 U/min). Das Auftreten einer kurzzeitig erhöhten Wärmeentwicklung im Reaktor nach Zugabe des Propylenoxids bestätigte die Aktivierung des Katalysators. Anschließend wurde die Temperatur der Mischung in Reaktor R2 auf 100°C abgesenkt.

Anschließend wurde das Ventil am Auslass von Reaktor R2 geöffnet. In die Gasphase von Reaktor R2 wurde kontinuierlich $CO_2$ mit einem Fluss von 20 g/h eingeleitet. Der Auslassstrom wurde über einen weiteren Druckbehälter (Reaktor R3) und einen Vordruckregler abgeleitet. Der Druck in den Reaktoren 2 und 3 wurde über den Vordruckregler auf 50 bar eingestellt. Über einen Massenflussregler wurden kontinuierlich 30 g/h Propylenoxid in Reaktor R2 dosiert. Sobald der Überlauf von Reaktor R2 (bei 175 ml Flüssigkeitsvolumen) erreicht wurde, wurde der kontinuierliche Propylenoxid-Strom auf 14,4 g/h heruntergeregelt. Gleichzeitig wurde die Mischung aus Starterverbindung und nicht aktiviertem DMC-Katalysator aus Reaktor R1 kontinuierlich mit einer Rate von 18,0 g/h in den Reaktor R2 eingeleitet und der $CO_2$ Strom auf einen Fluss von 15 g/h geregelt. Der Überlauf aus Reaktor R2 wurden in den Reaktor R3 eingeleitet. Das Produktgemisch wurde in Reaktor R3 bei 100°C unter Druck aufgefangen und bei 200 U/min gerührt.

Nach 24 Stunden Betriebsdauer wurde über ein Ventil eine Probe der flüssigen Phase aus Reaktor R2 entnommen und analysiert.

*Charakterisierung des Reaktionsgemisches in Reaktor R2:*

Die IR-spektroskopische Untersuchung des Reaktionsgemisches in Reaktor R2 direkt vor Entnahme der Probe ergab einen Umsatz an Propylenoxid von 98,5 %.

Die spezifische Produktleistung des Reaktors R2 betrug 161,0 [kg/($m^3$·h)].

*Charakterisierung des im stationären Zustand aus Reaktor R2 entnommenen Reaktionsgemisches:*

Die NMR spektroskopische Untersuchung ergab eine Selektivität g/e von 0,08.

Das molare Verhältnis von Carbonatgruppen zu Ethergruppen im Polyethercarbonatpolyol e/f betrug 18,40/81,60.

Das erhaltene Polyethercarbonatpolyol wies ein Molekulargewicht $M_n$ = 2668 g/mol, $M_w$ = 2984 g/mol und eine Polydispersität von 1,12 auf. Das Molekulargewicht $M_{90}$ betrug 4252 g/mol.

*Charakterisierung des Produktgemisches aus Reaktor R3 nach Entfernen der flüchtigen Bestandteile im Fallfilmverdampfer:*

OH Zahl: 53,8 mg KOH/g.

Viskosität: 1,2 Pa s.

Tabelle 1: Übersicht der Resultate der Beispiele 1 bis 4:

| Beispiel | 1 | 2 (Vergleich) | 3 | 4 (Vergleich) |
|---|---|---|---|---|
| Aktivierung DMC-Katalysator | aktiviert | nicht aktiviert | aktiviert | nicht aktiviert |
| Starterverbindung | PET-1 | PET-1 | PET-2 | PET-2 |
| Spezifische Produktleistung [kg/($m^3$·h)] | 170,2 | 161,8 | 162,4 | 161,0 |
| Selektivität g/e | 0,11 | 0,06 | 0,17 | 0,08 |
| Selektivität e/f | 23,72/76,28 | 25,93/74,07 | 15,08/84,92 | 18,40/81,60 |
| $M_n$ [g/mol] | 3755 | 3030 | 2734 | 2668 |
| Polydispersität $M_w/M_n$ | 1,20 | 1,31 | 1,09 | 1,12 |
| $M_{90}/M_n$ | 1,83 | 2,05 | 1,54 | 1,59 |
| OH Zahl [mg KOH/g] | 53,7 | 54,3 | 55,5 | 53,8 |
| Viskosität [Pa·s] | 5,0 | 5,7 | 0,9 | 1,2 |

Ein Vergleich des Beispiels 1 mit dem Vergleichsbeispiel 2 und des Beispiels 3 mit dem Vergleichsbeispiel 4 zeigt, dass der Einsatz eines aktivierten Katalysators zu einer höheren spezifischen Produktleistung führt. Die Analyse des im stationären Zustand entnommenen Reaktionsgemisches zeigt eine engere Molmassenverteilung des Polyethercarbonatpolyols (verringerte Polydispersität, geringeres Verhältnis $M_{90}/M_n$); die Analyse des erhaltenen Produktes eine geringere Viskosität des erhaltenen Polyethercarbonatpolyols bei Einsatz eines gemäß Schritt (β) aktivierten Katalysators.

**Beispiel 5: Kontinuierliches Verfahren zur Copolymerisation von Propylenoxid und $CO_2$ unter Einsatz eines in einem kontinuierlichen Verfahren ohne $CO_2$ aktivierten DMC-Katalysators**

Prozessschritte:

*Schritt (α) Herstellung einer Mischung aus DMC-Katalysator und Starterverbindung (Reaktor R1):*

In einem 300 ml Druckreaktor (Reaktor R1) ausgestattet mit Impellerrührer wurde eine Mischung aus DMC-Katalysator (0,0402 g) und PET-2 (100,02 g) vorgelegt. Der Reaktor wurde geschlossen, der Druck im Reaktor auf 50 mbar reduziert und der Reaktor auf 130°C aufgeheizt. Anschließend wurde ein leichter Ar-Strom am Boden des Reaktors in die Reaktionsmischung eingeleitet. Durch Regeln des Ar-Stroms und gleichzeitiges Entfernen des Gases aus dem Reaktor mit einer Pumpe wurde der Druck im Reaktor auf 50 mbar eingestellt und die Mischung für 60 min bei 130°C unter reduziertem Druck (50 mbar) und leichtem Ar-Strom gerührt (500 U/min).

*Schritt (β) (Aktivierung) in Reaktor R1:*

Es wurden 10 g Propylenoxid mit Hilfe einer HPLC-Pumpe (10 mL/min) in den Reaktor R1 zu dem Gemisch aus Schritt (α) dosiert. Die Abnahme der Konzentration des Propylenoxids wurde über IR Spektroskopie verfolgt. Die Reaktionsmischung wurde bis zum vollständigen Umsatz des Propylenoxids (*ca.* 15 min) gerührt (500 U/min). Anschließend wurden noch zwei weitere Male 10 g Propylenoxid mit Hilfe der HPLC-Pumpe (10 ml/min) zu dosiert und die Reaktionsmischung jeweils bis zum vollständigen Umsatz des Propylenoxids (*ca.* 15 min) gerührt (500 U/min). Das Auftreten einer kurzzeitig erhöhten Wärmeentwicklung im Reaktor nach Zugabe des Propylenoxids bestätigte die Aktivierung des Katalysators. Es wurden weitere 61,64 g Propylenoxid mit Hilfe der HPLC-Pumpe (10 ml/min) zu dosiert.

*Anfahren der kontinuierlichen Homopolymerisation (Reaktor R1):*

Anschließend wurde das Ventil am Auslass von Reaktor R1 geöffnet. In die Gasphase von Reaktor R1 wurde kontinuierlich Argon mit einem Fluss von 5 g/h eingeleitet. Der Auslassstrom wurde über den Co-Polymerisationsreaktor (Reaktor R2), einen weiteren Druckbehälter (Reaktor R3) und einen Vordruckregler abgeleitet. Der Druck in den Reaktoren 1, 2 und 3 wurde über den Vordruckregler auf 50 bar eingestellt. Über einen Massenflussregler wurden kontinuierlich 20 g/h Propylenoxid in Reaktor R1 dosiert. Gleichzeitig wurde kontinuierlich ein Gemisch aus DMC-Katalysator (0,3966 g) und Propylenglykol (75,049 g) mit einer Rate von 2,2 g/h in den Reaktor R1 eingeleitet.

*Anfahren der kontinuierlichen Copolymerisation (Reaktor R2)* [Schritt (γ)]:

Der Überlauf von Reaktor R1 wurde kontinuierlich in den zunächst leeren Reaktor R2 geführt. Nach 4,5 Stunden wurden über einen Massenflussregler kontinuierlich 55,85 g/h Propylenoxid in Reaktor R2 dosiert. Nach weiteren 4,0 Stunden wurde in die Gasphase von Reaktor R2 kontinuierlich $CO_2$ mit einem Fluss von 50 g/h eingeleitet. Das Produktgemisch wurde in Reaktor R3 bei 100°C unter Druck aufgefangen und bei 200 U/min gerührt.

*Betrieb der kontinuierlichen Homopolymerisation (Reaktor R1):*

Der Reaktor R1 wurde weiterhin bei 130°C gerührt (500 U/min). In die Gasphase von Reaktor R1 wurde kontinuierlich Argon mit einem Fluss von 5 g/h eingeleitet. Über einen Massenflussregler wurden kontinuierlich 20 g/h Propylenoxid in die flüssige Phase von Reaktor R1 dosiert. Gleichzeitig wurde kontinuierlich ein Gemisch aus DMC-Katalysator (0,4702 g) und Propylenglykol (90,024 g) mit einer Rate von 2,2 g/h in die flüssige Phase von Reaktor R1 eingeleitet.

*Betrieb der kontinuierlichen Copolymerisation (Reaktor R2)* [Schritt (γ)]:

Der Reaktor R2 wurde weiterhin bei 130°C gerührt (500 U/min). Der Überlauf von Reaktor R1 wurde kontinuierlich in den Reaktor R2 geführt. In die Gasphase von Reaktor R2 wurde kontinuierlich $CO_2$ mit einem Fluss von 50 g/h eingeleitet. Über einen Massenflussregler wurden kontinuierlich 55,85 g/h Propylenoxid in Reaktor R2 dosiert. Das Produktgemisch wurde in Reaktor R3 bei 100°C unter Druck aufgefangen und bei 200 U/min gerührt.

Nach 10 Stunden Betriebsdauer wurde über jeweils ein Ventil eine Probe der flüssigen Phase aus den Reaktoren 1 und 2 entnommen und analysiert.

*Charakterisierung des Reaktionsgemisches aus dem Homo-Polymerisationsreaktor (Reaktor R1):*

Die NMR-spektroskopische Untersuchung des Reaktionsgemisches ergab einen Umsatz an Propylenoxid von 86,0 %.

*Charakterisierung des Reaktionsgemisches aus dem Co-Polymerisationsreaktor (Reaktor R2):*

Die NMR-spektroskopische Untersuchung des Reaktionsgemisches ergab einen Umsatz an Propylenoxid von 84,3 %.

Die Selektivität g/e betrug 0,10.

Das molare Verhältnis von Carbonatgruppen zu Ethergruppen im Polyethercarbonatpolyol e/f betrug 7,21/92,79.

Das erhaltene Polyethercarbonatpolyol wies ein Molekulargewicht $M_n$ = 2386 g/mol, $M_w$ = 5157 g/mol und eine Polydispersität von 2,16 auf.

OH Zahl des erhaltenen Gemisches: 47,0 mg KOH/g.

Beispiel 5 zeigt, dass der DMC-Katalysator in einer kontinuierlichen Homo-Polymerisation aktiviert werden kann und in einer anschließenden kontinuierlichen Co-Polymerisation eingesetzt werden kann. Es wurde eine besonders hohe spezifische Produktleistung des Co-Polymerisationsreaktors von 376 kg/($m^3 \cdot h$) erzielt.

## Patentansprüche

1. Verfahren zur Herstellung von Polyethercarbonatpolyolen, umfassend den Schritt der Reaktion von Alkylenoxid mit Kohlendioxid in Gegenwart einer H-funktionellen Starterverbindung und Doppelmetallcyanid-Katalysator, **dadurch gekennzeichnet, dass** das Verfahren die folgenden Schritte umfasst:

   (α) gegebenenfalls in einem ersten Reaktor Vorbehandeln des Doppelmetallcyanid-Katalysators (DMC-Katalysators) bei einer Temperatur von 50 bis 200 °C und/oder reduziertem Druck (absolut) von 10 mbar bis 800 mbar,
   (β) in einem ersten Reaktor Inkontaktbringen des Doppelmetallcyanid-Katalysators und Suspensionsmittel mit Alkylenoxid unter Erhalt einer ersten Reaktionsmischung; und
   (γ) kontinuierliche Zugabe der ersten Reaktionsmischung, Alkylenoxid, Kohlendioxid und gegebenenfalls H-funktioneller Starterverbindung in einen zweiten Reaktor,

   wobei wenigstens in einem der Schritte (β) oder (γ) mindestens eine H-funktionelle Starterverbindung eingesetzt wird.

2. Verfahren gemäß Anspruch 1, wobei in Schritt (β) der Doppelmetallcyanid-Katalysator weiterhin mit Kohlendioxid in Kontakt gebracht wird.

3. Verfahren gemäß Anspruch 1 oder 2, wobei in Schritt (β) Doppelmetallcyanid-Katalysator, Alkylenoxid, Suspensionsmittel und/oder H-funktionelle Starterverbindung zumindest zeitweise kontinuierlich in den ersten Reaktor hinzudosiert werden.

4. Verfahren gemäß einem oder mehreren der vorangehenden Ansprüche, wobei in Schritt (γ) gebildete Reaktionsprodukte aus dem zweiten Reaktor kontinuierlich entnommen werden.

5. Verfahren gemäß Anspruch 4, wobei die Summe der in den zweiten Reaktor eingetragenen Massenströme gleich der Summe der aus dem zweiten Reaktor ausgetragenen Massenströme ist.

6. Verfahren gemäß einem oder mehreren der vorangehenden Ansprüche, wobei das Verhältnis des Massenstroms, mit der die erste Reaktionsmischung in den zweiten Reaktor dosiert wird, zu dem Massenstrom, mit der Alkylenoxid in den zweiten Reaktor dosiert wird, ≥ 0,001 bis ≤ 10 beträgt.

7. Verfahren gemäß einem oder mehreren der vorangehenden Ansprüche, wobei der erste Reaktor und/oder der zweite Reaktor ein rückvermischter Reaktor sind.

8. Verfahren gemäß einem oder mehreren der vorangehenden Ansprüche, wobei ein Teil des nach Schritt (γ) erhaltenen Produktes in den ersten und/oder zweiten Reaktor zurückgeführt wird.

9. Verfahren gemäß einem oder mehreren der vorangehenden Ansprüche, wobei als Alkylenoxid Ethylenoxid und/oder Propylenoxid eingesetzt wird.

10. Verfahren gemäß einem oder mehreren der vorangehenden Ansprüche, wobei als H-funktionelle Starterverbindung mindestens eine Verbindung ausgewählt aus der Gruppe enthaltend Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und $C_1$-$C_{24}$ Alkyl-Fettsäureester, die im Mittel mindestens 2 OH-Gruppen pro Molekül enthalten, eingesetzt wird.

11. Verfahren gemäß einem oder mehreren der vorangehenden Ansprüche, wobei der eingesetzte Doppelmetallcyanid-Katalysator mindestens eine Verbindung ausgewählt aus der Gruppe Zinkhexacyanocobaltat(III), Zinkhexacyanoiridat(III), Zinkhexacyanoferrat(III) und/oder Cobalt(II)hexacyanocobaltat(III) enthält.

12. Verfahren gemäß einem oder mehreren der vorangehenden Ansprüche, wobei die Schritte (β) und/oder (γ) bei einem Druck von ≥ 10 mbar bis ≤ 100 bar durchgeführt werden.

13. Verfahren gemäß einem oder mehreren der Ansprüche 1 bis 12, wobei das Verfahren die folgenden Schritte umfasst

(α) Vorbehandeln des Doppelmetallcyanid-Katalysators (DMC-Katalysators) bei einer Temperatur von 50 bis 200 °C und/oder reduziertem Druck (absolut) von 10 mbar bis 800 mbar, wobei
(α1) im ersten Reaktor der DMC-Katalysator und H-funktionelle Starterverbindung vorgelegt werden,
(α2) durch den ersten Reaktor bei einer Temperatur von 50 bis 200°C ein Inertgas ein Inertgas-Kohlendioxid-Gemisch oder Kohlendioxid geleitet wird und gleichzeitig durch Entfernen des Inertgases oder Kohlendioxid ein reduzierter Druck (absolut) von 10 mbar bis 800 mbar im ersten Reaktor eingestellt wird.

14. Verfahren gemäß einem oder mehreren der Ansprüche 1 bis 12, wobei in Schritt (α) DMC-Katalysator und H-funktionelle Starterverbindung kontinuierlich in den ersten Reaktor dosiert werden.

15. Verfahren gemäß einem oder mehreren der Ansprüche 1 bis 14, wobei in Schritt (β) als Suspensionsmittel mindestens eine H-funktionelle Starterverbindung ausgewählt aus der Gruppe bestehend aus Polyetherpolyolen, Polycarbonatpolyolen, Polyestercarbonatpolyolen, Polyetherestercarbonatpolyolen oder Polyethercarbonatpolyolen eingesetzt wird, wobei diese H-funktionelle Starterverbindungen jeweils eine Hydroxylzahl im Bereich von 3,0 mg KOH/g bis 1000 mg KOH/g aufweisen.

Europäisches Patentamt
European Patent Office
Office européen des brevets

# EUROPÄISCHER RECHERCHENBERICHT

Nummer der Anmeldung
EP 14 19 3601

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CA 2 882 891 A1 (BAYER MATERIALSCIENCE AG [DE]) 6. März 2014 (2014-03-06)<br>* Ansprüche 1,5,7,8-11,12 *<br>* Seite 12, Zeile 15 - Zeile 20 *<br>----- | 1-15 | INV.<br>C08G65/26<br>C08G64/34 |
| A | EP 2 548 906 A1 (BAYER MATERIALSCIENCE AG [DE]) 23. Januar 2013 (2013-01-23)<br>* Anspruch 1; Beispiel 1 *<br>----- | 1-15 | |
| A | EP 2 703 426 A1 (BAYER MATERIALSCIENCE AG [DE]) 5. März 2014 (2014-03-05)<br>* Anspruch 1; Beispiel 7 *<br>----- | 1-15 | |
| A | WO 2008/092767 A1 (BASF SE [DE]; MIJOLOVIC DARIJO [DE]; KUMMETER MARKUS [DE]; STOESSER MI) 7. August 2008 (2008-08-07)<br>* Anspruch 1; Beispiel 1 *<br>----- | 1-15 | |
| | | | RECHERCHIERTE SACHGEBIETE (IPC) |
| | | | C08G |

Der vorliegende Recherchenbericht wurde für alle Patentansprüche erstellt

2

| Recherchenort | Abschlußdatum der Recherche | Prüfer |
|---|---|---|
| Den Haag | 22. Mai 2015 | O'Sullivan, Timothy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 14 19 3601

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2015

| Im Recherchenbericht angeführtes Patentdokument | Datum der Veröffentlichung | Mitglied(er) der Patentfamilie | Datum der Veröffentlichung |
|---|---|---|---|
| CA 2882891 A1 | 06-03-2014 | CA 2882891 A1 | 06-03-2014 |
| | | CN 104540875 A | 22-04-2015 |
| | | EP 2703425 A1 | 05-03-2014 |
| | | WO 2014033070 A1 | 06-03-2014 |
| EP 2548906 A1 | 23-01-2013 | CN 103687894 A | 26-03-2014 |
| | | EP 2548906 A1 | 23-01-2013 |
| | | EP 2734568 A1 | 28-05-2014 |
| | | KR 20140048233 A | 23-04-2014 |
| | | US 2014228537 A1 | 14-08-2014 |
| | | WO 2013011014 A1 | 24-01-2013 |
| EP 2703426 A1 | 05-03-2014 | CA 2882915 A1 | 06-03-2014 |
| | | EP 2703426 A1 | 05-03-2014 |
| | | WO 2014033071 A1 | 06-03-2014 |
| WO 2008092767 A1 | 07-08-2008 | AT 493457 T | 15-01-2011 |
| | | CN 101611074 A | 23-12-2009 |
| | | EP 2115032 A1 | 11-11-2009 |
| | | ES 2358861 T3 | 16-05-2011 |
| | | JP 5512283 B2 | 04-06-2014 |
| | | JP 2010516796 A | 20-05-2010 |
| | | KR 20090107555 A | 13-10-2009 |
| | | PT 2115032 E | 01-02-2011 |
| | | US 2010048935 A1 | 25-02-2010 |
| | | WO 2008092767 A1 | 07-08-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20100048935 A1
- WO 2006103213 A1
- WO 2012130760 A1
- EP 0222453 A2
- WO 2003029325 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A1
- WO 9816310 A1
- WO 0047649 A1
- JP 4145123 B
- WO 9740086 A
- WO 0139883 A
- WO 0180994 A


### In der Beschreibung aufgeführte Nicht-Patentliteratur


- **INOUE et al.** Copolymerization of Carbon Dioxide and Alkylenoxide with Organometallic Compounds. *Die Makromolekulare Chemie,* 1969, vol. 130, 210-220